# EUROPEAN PATENT SPECIFICATION

(11) **EP 2 262 377 B1**
(45) Date of publication and mention of the grant of the patent: **26.09.2018**
(21) Application number: 09714831.6
(22) Date of filing: 26.02.2009
(51) Int. Cl.: A23G 4/12, A23G 3/50, A23G 3/36, A23G 4/20

(54) **MULTI-REGION CONFECTIONERY**
MEHRZONIGES KONFEKT
CONFISERIE À RÉGIONS MULTIPLES

(30) Priority: 27.02.2008 US 31784
(43) Date of publication of application: 22.12.2010
(73) Proprietor: Intercontinental Great Brands LLC, East Hanover, NJ 07936 (US)
(72) Inventor: ASHOKAN, Bharani, Elmsford NY 10523 (US); COTTEN, Gerald, B., Sparta NJ 07871 (US); O'NEILL, Simone, A., Wayne NJ 07470 (US); PERRY, Georgina, Louise, New York NY 10005 (US); VALAND, Khyati, A., Flanders NJ 07836 (US); WATSON, Deborah, L., Haskell NJ 07420 (US)
(74) Representative: Wilson Gunn
(86) International application number: PCT/US2009/035269
(87) International publication number: WO 2009/108769

(56) References cited:
- WO-A1-2008/030274
- US-A- 5 879 728
- US-A1- 2002 172 746
- US-A1- 2004 156 993
- US-A1- 2004 228 914
- US-A1- 2006 045 934
- US-A1- 2006 275 361
- US-A1- 2006 280 835
- US-A1- 2006 280 837
- US-A1- 2006 286 201
- US-A1- 2006 286 284
- US-A1- 2007 031 535
- US-A1- 2007 148 284
- US-A1- 2007 148 286

## Description

### FIELD

The present invention is directed generally to multi-region chewy confectionery. More particularly, the present invention relates to chewy confectionery compositions with two or more regions where the first region includes a particulate material and the second region includes soluble chewable matrix. The chewy confectionery can optionally include a third region at least partially surrounding the second region.

### BACKGROUND

Multi-region or center-filled chewing gums are in popular demand today. Typically, these products have a solid exterior portion and a soft or liquid-type center. The outer portion can be chewing gum or bubble gum of some type, while the liquid center portion can be a flavored material typically having a syrup-like consistency.

Documents US 2006/286201 A1, US 2006/280835 A1, WO 2008/030274 A1 and US 2006/280837 A1 disclose confectionery products, such as chewing gums, having three regions. There are also chewy confectionery products as well as chewy confectionery products with a hard sugar or sugarless shells on the exterior. However, there are few, if any, chewy confectionery products with multi-region compositions that provide the sensory experience of multi-region chewing gums.

There also is a consumer demand for products that impart perceptions of cooling or mouth moistening upon consumption. Therefore, it would be desirable to provide multi-region chewy confectionery products that provide multiple sensory experiences and that impart enhanced cooling perception and/or mouth moistening upon consumption.

### SUMMARY

In one embodiment, there is provided a confectionery composition comprising:
a. a first region, said first region comprising a particulate material wherein said particulate material has a negative heat of solution and wherein said particulate material has a tap density of from about 0.4gm./ml. to about 0.8 gm./ml.;
b. a second region, said second region comprising a soluble chewable matrix having a moisture content of from about 5% w/w to about 15% w/w by weight of said chewable matrix, wherein said second region at least partially surrounds said first region; and
c. a third region at least partially surrounding said second region, said third region comprising a coating.

In another embodiment, there is provided a method of
A method of producing a confection comprising the steps of
a. producing a filled rope comprising:
   i. a first region, said first region comprising a particulate material and a carrier, wherein said particulate material has a negative heat of solution and wherein said particulate material has a tap density of from about 0.4 gm./ml. to about 0.8 gm./ml.; and
   ii. a second region, said second region comprising a soluble chewable matrix having a moisture content of from about 5% w/w to about 15% w/w by weight of said chewable matrix, wherein said second region has a moisture content of from about 5% w/w to about 15% w/w by weight of said second region and wherein said second region at least partially surrounds said first region;
b. sizing said filled rope;
c. forming said sized filled rope into individual pieces; and
d. applying a third region to said individual pieces, wherein said third region at least partially surrounds said second region and said third region comprises a coating.

In another embodiment, there is provide a method of providing a refreshing sensation to a user comprising the steps of
providing a confectionery product according to the method defined above; and
formulating the first region to have a higher intensity of chemical cooling than the second region.

### DETAILED DESCRIPTION

The multi-region chewy confectionery includes a second region or shell composition where the texture of the shell composition enables a consumer to bite through the multi-region confection so as to release the first region or filling composition and then enables a consumer to continue chewing after the initial sensation of the filling composition has been perceived. This multi-region configuration provides an enhanced eating experience due to the presence of more than one texture, which results in multiple sensory experiences. In some embodiments, this multi-region configuration provides upfront cooling and/or mouth moistening combined with prolonged chewing satisfaction for an enhanced sensory experience compared to confectionery without multi-region configurations. In some embodiments, the prolonged chewing period can provide a taste or flavor that may complement the initial mouth moistening and/or chemical cooling sensation provided and/or it may contrast or change from the initial mouth moistening and/or chemical cooling sensation. For example, in some embodiments, the filling region provides a cooling, mint sensation while the chewy shell region provides a fruit flavor.

Chewy confectionery is generally considered to be those confections with soluble components that allow a consumer to experience a chew texture with elasticity for a chew period of more than one minute. Chewy confections include bulk sweeteners, gelling agents, and fats. They can optionally include chew texture modifying agents to modify the chew texture.

In some embodiments, a multi-region chewy confectionery is provided where the first region composition includes one or more particulate materials that have a negative heat of solution to provide a consumer with a perceptible sensation of cooling. This sensation of cooling can be measured using quantitative descriptive analysis by measuring the amount of chemical cooling provided by the filling composition and/or the multi-region chewy confection.

In some embodiments, the particulate material has a water solubility that enhances fast dissolution in the mouth. In some embodiments, the filling composition includes a non-aqueous carrier that melts upon consumption and enhances fast dissolution of the particulate materials. The term "dissolution time" as used herein refers to the amount of time for the filling composition to disperse in the oral cavity. Dissolution time can be measured by sensory testing techniques such as the quantitative descriptive analysis.

One problem that can be encountered by multi-region chewy candies is moisture migration from the chewy shell region to the filling region due to the moisture differential between the filling region and chewy shell region. Chewy candy compositions can have moisture levels higher than filling compositions with particulate materials. In such cases, the filling composition can absorb moisture from the chewy shell region resulting in quality deterioration of both regions. If the filling composition absorbs moisture from the shell region, the filling can have a less perceptible cooling sensation and the shell region can dry out and have a less desirable chew texture character. In some embodiments, the problem of moisture migration may be mitigated by using sparingly hygroscopic particulate materials in the filling composition. In some embodiments, the sparingly hygroscopic particulate materials nonetheless have water solubilities that allow for desirable dissolution times.

As used herein the transitional term "comprising," (also "comprises," and the like) which is synonymous with "including," "containing," or "characterized by," is inclusive or open-ended and does not exclude additional, unrecited elements or method steps, regardless of its use in the preamble or the body of a claim.

As used herein, the terms "first region" or "center fill" or "center-fill" or "center filling" or "center-filling" or "filling" or "filling region" are used interchangeably to refer to the innermost region of the compositions. The term "center-fill" does not imply symmetry of a chewy confectionery composition, only that the "center-fill" is within another region of the chewy confectionery. In some embodiments, more than one filling may be present.

As used herein, the terms "second region" or "shell composition" or "shell" or "shell region" or "chewy shell region" are used interchangeably to refer to a region of the compositions that may be adjacent to or at least partially surrounding the center-fill, or innermost, region.

As used herein, term "chewable matrix" or "chewable matrices" refer to components of the second region or shell composition that may provide the shell composition with a desired chewy texture. For example, the shell composition can include a chewable matrix such as a caramel composition and an additional bulk sweetener such as erythritol or inclusions such as crisp rice, fruit bits, and the like and combinations thereof to create a desired chewy texture and/or flavor. Alternatively, the shell composition can include a combination of chewable matrices such as a combination of caramel and fudge.

As used herein, the term "third region" refers to a region of the compositions that is adjacent to or at least partially surrounding the second region or shell composition. In some embodiments, the third region can be the outermost region of the composition. When the third region forms the outermost region of the composition, the terms "third region" and "coating composition" can be used interchangeably.

As used herein, the term "fourth region" refers to an optional region of the compositions that may be adjacent to or at least partially surrounding the third region. In some embodiments, the fourth region can be the outermost region of the composition. When the fourth region forms the outermost region of the composition, the terms "fourth region" and "coating composition" can be used interchangeably.

As used herein, the terms "surround," "surrounding," and the like are not limited to encircling. These terms may refer to partially or fully enclosing or confining on all sides, encircling or enveloping, and are not limited to symmetrical or identical thicknesses for a region in the confectionery product.

As used herein, the term "liquid" refers to compositions that will readily flow or maintain fluid properties at room temperature and pressure. The term "liquid" may include solutions, suspensions, emulsions, semi-solids, cremes, gels, and the like and combinations thereof that may not be completely liquid.

As used herein, the term "particulate material" refers to a plurality of particles of solid materials including, but not limited to, powders, granules, crystals, and the like and combinations thereof. In some embodiments, the particulate material is crystalline.

As used herein, the term "carrier" refers to ingredients or combinations of ingredients that allow at least a portion of the particulate material to remain in particulate form when suspended therein. The suspended particles may be in crystalline form.

As used herein, the term "ingredient" and the term "component" are used interchangeably to describe any additive, fixing, substance, material, agent, active, element, or part that may be included in the confectionery compositions of some embodiments.

### First Region or Filling Composition

The term "center fill composition," or "center filling composition," or "center fill," or "filling," or "first region," as used herein refers to the portion of the confection that that is at least partially surrounded by a chewy confectionery composition. In some embodiments, the filling composition is a solid at room temperature. In some embodiments, the filling composition can take the physical form of a semi-solid. In some embodiments, the first region or filling composition is present in amounts of from about 5% w/w to about 25% w/w by weight of the multi-region confectionery composition. In other embodiments, the first region or filling composition is present in amounts of from about 7% w/w to about 20% w/w by weight of the multi-region confectionery composition while in still other embodiments, first region or filling composition is present in amounts of from about 10% w/w to about 15% w/w by weight of the multi-region confectionery composition. In some embodiments, the first region or filling composition is present in an amount of at least 12% w/w by weight of the multi-region confectionery composition.

The filling composition includes a particulate material. The term "particulate material" as used herein refers to a plurality of particles of solid materials including, but not limited to, powders, granules, crystals, and the like and combinations thereof. In some embodiments, the particulate material is crystalline.

In some embodiments, the particulate material has a maximum average particle size of about 750 microns, while in other embodiments, the particulate material has a maximum average particle size of about 600 microns while in still other embodiments, the particulate material has a maximum average particle size of about 300 microns while in still other embodiments, the particulate material has a maximum average particle size of about 100 microns.

Particle size can be determined by any conventional means such as by using a particle size analyzer to determine a particle size distribution. Average particle size and maximum average particle size can then be calculated or otherwise determined from such particle size distributions.

In some embodiments, the particulate material has a maximum average particle size of less than about 750 microns while in other embodiments, the particulate material has an average particle size of less than about 600 microns while in still other embodiments, the particulate material has a maximum average particle size of less than about 300 microns while in still other embodiments, the particulate material has a maximum average particle size of less than about 20 microns.

In some embodiments, the particulate material has an average particle size of from about 20 microns to about 200 microns. In some embodiments, the particulate material has an average particle size of from about 35 microns to about 150 microns.

In some embodiments, the particulate material is present in amounts of from about 20% w/w to about 100% w/w by weight of the filling composition. In some embodiments, the particulate material is present in amounts of from about 30% w/w to about 75% w/w by weight of the filling composition.

In some embodiments, the particulate material is a saccharide. Suitable saccharides can be sugar, sugarless, or blends of saccharides and can include mono-saccharides, di-saccharides and poly-saccharides. Suitable sugar saccharides can include, but are not limited to, sucrose (sugar), dextrose, maltose, dextrin, maltodextrins, xylose, ribose, glucose, mannose, galactose, fructose (levulose), and combinations thereof.

In some embodiments, the particulate material can include a sugarless saccharide such as a polyol. Suitable polyols include sorbitol, xylitol, mannitol, galactitol, maltitol, hydrogenated isomaltulose (isomalt), lactitol, erythritol, hydrogenated starch hydrolysates, and mixtures thereof.

In some embodiments, the particulate material can include mannitol, sorbitol, dextrose, fructose, maltose, maltitol, lactitol, isomalt, erythritol, sucrose, maltose, and combinations thereof.

In some embodiments, the particulate material is a blend of materials where a first material first particulate material selected from the group consisting of dextrose, sorbitol, and combinations thereof and a second particulate material selected from the group consisting of mannitol, maltitol, lactitol, isomalt, xylitol, erythritol, sucrose, maltose, and combinations thereof; wherein said blend is less hygroscopic than sorbitol.

In some embodiments, the saccharide particulate material has a negative heat of solution and thus provides a cooling sensation. Heat of solution is a thermodynamic concept, referring to the amount of heat evolved or absorbed when one mole of solute is dissolved in a solvent. If a lot of energy is needed to dissolve the substance, the heat of solution is negative. In such cases, an endothermic cooling effect is perceived. In accordance therewith, the saccharide particulate material used in some embodiments may have a heat of solution of less than about -2 cal/g, more specifically less than about -10 cal/g, and even more specifically less than about -25 cal/g. In some embodiments, the heat of solution of the saccharide particles may be about -43 cal/g or less.

Bulk and tap densities can be used to quantify the degree of packing a particulate material exhibits. Bulk density refers to the volume a given weight of particulate material occupies before it is tapped to encourage packing while tap density refers to the volume after tapping.

Bulk density can be reliably measured by pouring a particulate material into a tared 100 ml. cylinder until the particulate material fills the cylinder to the 100 ml. mark and recording the weight of the particulate material. Bulk density is then calculated and recorded in gm/ml.

Tap density can be then be reliably measured by dropping or tapping the filled, 100 ml. cylinder from a distance of about 6 mm. onto a hard surface until no further settling of the particulate material remains (approximately one minute). The volume of the particulate material is recorded and tap density is then calculated and recorded in gm./ml.

For other descriptions of how to determine bulk and tap densities, *see* p. 275, Physical Characterization of Pharmaceuticals Solids, edited by H.G. Brittain, published by Informa Health Care, 1995. For example, tap density can be measured by filling a tared graduated cylinder with a specified weight of particulate material and dropping the cylinder a specified number of times from a specified height at timed intervals. For tap density measurements, the number of "drops" or "taps" can be from 200 to 1000. Alternatively, the dropping/tapping can be carried out until the volume of material remains constant *(see* p. 275, Physical Characterization of Pharmaceutical Solids, edited by H.G. Brittain, published by Informa Health Care, 1995).

Particulate materials that exhibit relatively small differences between bulk density and tap density measurements generally have better flow properties and compressibility than particulate materials that exhibit large differences. Particulate materials with good flow properties and compressibility result in filling compositions that fill a greater percentage of the volume of the cavity located in the shell region. Such particulate materials can also enable a larger amount of filling composition to be incorporated into a multi-region chewy confection.

In some embodiments, the particulate material has a ratio of tap density to bulk density that is from about 0.5 to about 2.5. In some embodiments, the particulate material has a ratio of tap density to bulk density that is from about 0.7 to about 2.3 while in still other embodiments, the particulate material has a ratio of tap density to bulk density of from about 0.9 to 2.1.

The particulate material has a tap density of from about 0.4 gm/ml to about 0.8 gm/ml. In other embodiments, the particulate material has a tap density of from about 0.5 gm/ml to about 0.7 gm/ml. while in still other embodiments, the particulate material has a tap density of from about 0.5 gm/ml to about 0.6 gm/ml.

When the filling composition fills 90% or more of the shell region cavity, the multi-region chewy confections can be more stable during processes such as coating where the multi-region chewy confections are subjected to pressures that can deform the multi-region chewy confections.

Particulate materials with tap density of from about 0.4 gm/ml to about 0.8 gm/ml. enable a larger amount of filling composition to be incorporated into a multi-region chewy confection. In some embodiments, the filling composition is present in amounts of from about 5% w/w to about 50% w/w by weight of the multi-region confectionery composition. In other embodiments, the first region or filling composition is present in amounts of from about 12% w/w to about 35% w/w by weight of the multi-region confectionery composition while in still other embodiments, first region or filling composition is present in amounts of from about 15% w/w to about 25% w/w by weight of the multi-region confectionery composition.

Additionally, particulate materials with tap density of from about 0.4 gm/ml to about 0.8 gm/ml. allow for a larger amount of particulate material to be used in the filling composition resulting in filling compositions that can provide a more intense cooling sensation.

In some embodiments, the particulate material has a water solubility of from about 20 grams/100 grams of water at 25°C to about 500 grams/100 grams of water at 25°C. In other embodiments, the particulate material has a water solubility of from about 50 grams/100 grams of water at 25°C to about 250 grams/100 grams of water at 25°C. Particulate materials with water solubility in these ranges can enhance the dissolution time of the filling composition and result in multi-region chewy confections with an improved perception of refreshment as measured by consumer testing and/or an improved perception of chemical cooling as measured by quantitative descriptive analysis (methodology described below).

In some embodiments, the particulate material is sparingly hygroscopic. Hygroscopicity is the capacity of a material to react to environmental moisture by either absorbing moisture from the environment or by releasing moisture into the environment. Hygroscopicity is determined by creating sorption isotherms. Sorption isotherms plot the moisture content of a material across a range of relative humidity (RH) at a constant temperature. Highly hygroscopic materials such as sorbitol exhibit steep sorption isotherms meaning that they absorb relatively large amounts of moisture even at relatively low RH while sparingly hygroscopic materials such as erythritol or isomalt exhibit flatter and less steep sorption isotherms meaning that they absorb less moisture over a wider range of RH.

Sparingly hygroscopic particulate materials can enhance the acceptability of a multi-region chewy confection by limiting the moisture transfer between the filling composition and the chewy shell composition. For example, for a multi-region chewy confection with a filling composition that has a moisture content lower than the moisture content of the chewy shell composition, inclusion of a sparingly hygroscopic particulate material in the filling composition will limit the amount of moisture that migrates into the filling composition.

The term "sparingly hygroscopic" herein means that the particulate material has a hygroscopicity that is less than sorbitol. In some embodiments, the particulate material has an equilibrium moisture uptake at 40% RH of not more than about 8%. Equilibrium moisture uptake is the quantity of water, as measured by an increase in weight of the material after it reaches equilibrium, that a material absorbs at a given relative humidity. In some embodiments, the particulate material exhibits an equilibrium moisture uptake at 40% RH of not more than about 7% while in other embodiments, uptake is less than about 6%.

Sparingly hygroscopic particulate materials can include, but are not limited to, mannitol, polyglycitol powders, maltitol, lactitol monohydrate, isomalt, erythritol, sucrose, and combinations thereof. Sparingly hygroscopic particulate materials can also be formed by blending particulate materials. For example, a sparingly hygroscopic particulate material can be formed by blending a more hygroscopic particulate material such as sorbitol with a less hygroscopic material such as isomalt. In some embodiments, a blend can include first particulate material selected from the group consisting of dextrose, sorbitol, and combinations thereof and a second particulate material selected from the group consisting of mannitol, maltitol, lactitol, isomalt, xylitol, erythritol, sucrose, maltose, and combinations thereof; wherein said blend is less hygroscopic than sorbitol.

In some embodiments, the first region or filling composition can include a carrier. The term "carrier" as used herein refers to any liquid, semi-solid, or solid materials or combination of materials that allows at least a portion of the particulate material to remain in particulate form when suspended therein. The particulate material desirably will not completely dissolve in the carrier. Accordingly, the particulate material may be perceived by the individual upon consumption of the multi-region chewy confectionery composition, thereby providing enhanced cooling and/or textural perceptions within the oral cavity of the individual. In some embodiments, the filling composition may include a slurry of the carrier and particulate material.

Suitable carriers can include aqueous materials such as syrups, non-aqueous materials such as fats or oils, or combinations of aqueous and non-aqueous materials.

Suitable aqueous carriers can include, but are not limited to, glycerin, propylene glycol, corn syrups, sugar syrups, dextrose syrups, polydextrose syrups, high fructose corn syrups, invert sugar syrups, oligo saccharide syrups, fructooligosaccharide syrups, sorbitol syrups, hydrogenated starch hydrolysate syrups, maltitol syrups, polyglycitol syrups, hydrocolloids, and combinations thereof.

The carrier is generally present is amounts of from about 1% w/w to about 80% w/w by weight of the filling composition. In some embodiments, the carrier is present is amounts of from about 30% w/w to about 60% w/w by weight of the filling composition.

Suitable non-aqueous carriers can include can include fats of vegetable origin, animal origin, or mixtures thereof. Suitable vegetable fats can include soybean fats, cottonseed fats, corn fats, almond fats, peanut fats, sunflower fats, rapeseed fats, olive fats, palm fats, palm kernel fats, illipe fats, shea fats, coconut fats, cocoa fats, cocoa butter fats, cocoa fat substitutes, and combinations thereof. These vegetable fats can be hydrogenated to varying degrees as desired. Suitable animal fats can include dairy fats such as milk fat and butter. The non-aqueous carrier is generally present in amounts of from about 1% w/w to about 80% w/w by weight of the filling composition. In some embodiments, the non-aqueous carrier is present in amounts of from about 30% w/w to about 60% w/w by weight of the filling composition.

In some embodiments, the non-aqueous carrier is a fat with a complete melting point of from about 30°C to about 40°C. As used herein, the term "complete melting point" refers to the temperature at which the fat no longer has visible, un-melted particles as measured by any standard melting point test method such as capillary melting point tests. In some embodiments, the non-aqueous carrier is a fat with a complete melting point of less than 40°C.

In some embodiments, the fat has a melting point range expressed as a temperature differential of no more than 5°C. As used herein, the term "melting point range" refers to the temperature differential from the temperature at which the fat begins to melt to the temperature at which a majority of the fat is melted. A melting point range expressed as a temperature differential of no more than 5°C is known to those of skill in the art as a sharp melting point range as this differential is relatively small. Such sharp melting point fats and can provide a cooling sensation upon melting. In some embodiments, the fat has a complete melting point less than 38°C and a melting point range of no more than 5°C.

In some embodiments, the fat has a wider melting point range expressed as a temperature differential of from about 7°C to about 38°C. In some embodiments, the fat has a melting point range that begins at from about 10°C and ends at about 35°C. In some embodiments, the fat has a complete melting point of less than 40°C and a melting point range expressed as a temperature differential of from about 7°C to about 38°C.

In some embodiments, the average particle size of the particulate material enables a relatively larger amount of particulate material to be included in a filling composition with a non-aqueous carrier. For example, a particulate material with a maximum average particle size of less than about 200 microns can be used in an amount of from about 35% w/w to about 65% w/w by weight of the filling composition.

The non-aqueous carrier is generally present in amounts of from about 1% w/w to about 80% w/w by weight of the filling composition. In some embodiments, the non-aqueous carrier is present in amounts of from about 30% w/w to about 60% w/w by weight of the filling composition while in other embodiments; the non-aqueous carrier is present in amounts of from about 40% w/w to about 50% w/w by weight of the filling composition.

Suitable aqueous carriers can include sugar or sugarless bulk sweetener syrups and can include glycerin, propylene glycol, corn syrups, sugar syrups, dextrose syrups, polydextrose syrups, high fructose corn syrups, invert sugar syrups, oligo saccharide syrups, fructooligosaccharide syrups, sorbitol syrups, hydrogenated starch hydrolysate syrups, maltitol syrups, polyglycitol syrups, hydrocolloids, and combinations thereof.

Suitable hydrogenated starch hydrolysates include those disclosed in U.S. Patent No. 4,279,931 and various hydrogenated glucose syrups and/or powders that contain sorbitol, maltitol, hydrogenated disaccharides, hydrogenated higher polysaccharides, or mixtures thereof. Hydrogenated starch hydrolysates are primarily prepared by the controlled catalytic hydrogenation of corn syrups. The resulting hydrogenated starch hydrolysates are mixtures of monomeric, dimeric, and polymeric saccharides. The ratios of these different saccharides give different hydrogenated starch hydrolysates different properties. Mixtures of hydrogenated starch hydrolysates, such as LYCASIN®, a commercially available product manufactured by Roquette Freres of France, and HYSTAR®, a commercially available product manufactured by SPI Polyols, Inc. of New Castle, Delaware, are also useful.

Aqueous carriers are generally present in amounts of from about 20% w/w to about 80% w/w by weight of the filling composition. In some embodiments, the aqueous carrier is present in amounts of from about 40% w/w to about 70% w/w by weight of the filling composition while in other embodiments; the aqueous carrier is present in amount of from about 45% w/w to about 65% w/w by weight of the filling composition.

In general, the carrier is present in the multi-region chewy confectionery composition in amounts of from about 5% to about 15% by weight of the multi-region chewy confectionery composition, more specifically from about 6% to about 14% by weight of the multi-region chewy confectionery composition, and even more specifically from about 7% to about 10% by weight of the multi-region chewy confectionery composition.

In some embodiments, it may be desirable to employ saccharide particulate material in combination with another saccharide that is not in particulate form. For instance, erythritol powder may be suspended in the carrier and another non-particulate polyol also may be included in the filling composition.

In addition to providing cooling, the particulate material may also provide a textural perception within the oral cavity. In particular, the particles may be of a size that can be perceived on the tongue of the individual, thus providing a slightly gritty or crunchy feeling. In some embodiments, for instance, the particle material may have a particle size of less than about 45 microns.

The particulate material can also provide structural integrity to the multi-region confectionery composition. Structural integrity refers to the resistance to deformation exhibited by the multi-region confection. Particulate material can contribute to structural integrity by filling the cavity or cavities in the shell region such that the shell does not deform under pressure as discussed above in the section describing tap density. Additionally, structural integrity can be provided by particulate material in the nanomaterial size range. Nanomaterials are those with average particle size of less than 1000 nm. These nanosized materials can provide structural integrity by filling the spaces in between larger particle sizes.

In general, the particulate material is present in the multi-region chewy confectionery composition in amounts of from about 1% to about 20% by weight of the multi-region chewy confectionery composition, more specifically from about 3% to about 15% by weight of the multi-region chewy confectionery composition, and even more specifically from about 5% to about 10% by weight of the multi-region chewy confectionery composition. In some embodiments, the particulate material is present in the filling composition in amounts of from about 20% to about 80% by weight of the filling composition.

The filling composition also may include at least one flavor agent and/or at least one cooling agent. Examples of suitable flavor agents and cooling agents are provided herein in the section entitled "Active Agents". In some embodiments, a pre-mix of a flavor agent and a cooling agent may be included. The flavor agent may be a liquid, such as a flavor oil, in which the cooling agent may be dissolved. For example, menthol crystals may be dissolved in a flavor oil. The pre-mix may be added to the carrier in the filling composition in addition to the particulate material, and also suspended therein. For instance, in some embodiments, the filling composition includes a slurry of the carrier, particulate material, flavor and cooling agent. Upon consumption, the cooling agent may further enhance the cooling effect and/or the refreshment perception of the multi-region chewy confectionery composition.

In some embodiments described herein, the filling composition may present viscosity differences that can be manipulated for a desired effect. In some embodiments, the filling composition can be formulated to have low viscosities that consumers may perceive as refreshing. In some embodiments, the viscosity of the filling composition can be manipulated for a variety of reasons including, but not limited to, processing efficiency or creation of a desired perception. In some embodiments, the viscosity of the filling composition can be from about 3,000 to about 10,000 Pascal seconds. In some embodiments, the viscosity of the filling composition can be from about 4,000 to about 6,5000 Pascal seconds.

In some embodiments, the water activity of the filling composition can be manipulated for a variety of reasons including, but not limited to, microbial stability or maintenance of a desired texture. In some embodiments, the water activity of the filling composition can be from about 10% to about 70% expressed in equilibrium relative humidity (ERH) percentage units. In some embodiments, the water activity of the filling composition can be from about 25% to about 35% ERH.

Liquids that can be included in the filling composition in some embodiments can include, but are not limited to, fruit juice; vegetable juice; fruit puree; fruit pulp; vegetable pulp; vegetable puree; fruit sauce; vegetable sauce; honey; maple syrup; molasses; corn syrup; sugar syrup; polyol syrup; hydrogenated starch hydrolysates syrup; emulsions; vegetable oil; glycerin; propylene glycol; ethanol; liqueurs; chocolate syrup, dairy-based liquids such as milk, cream, and the like and combinations thereof.

The filling compositions also may include any components known in the art for incorporation with a filling composition. In some embodiments, this may include glycerin in addition to one or more other polyols in amounts greater than zero up to about 20%, more specifically, up to about 10% by weight of the total multi-region chewy confectionery composition, i.e., including a filling composition, a shell region and a coating. In some embodiments, the filling is approximately 8% by weight of the total multi-region chewy confectionery composition. In some embodiments, other polyol components in the filling can include maltitol, sorbitol, xylitol, or a combination thereof.

In some embodiments, the filling composition may contain those traditional ingredients well known in the confectionery arts, such as flavoring agents, sensates, sweetening agents, and the like, and mixtures thereof. In addition to confectionery additives, the filling composition may also contain pharmaceutical additives such as medicaments, breath fresheners, vitamins, minerals, caffeine, fruit juices, and the like, and mixtures thereof. The confectionery and pharmaceutical agents may be used in many distinct physical forms well known in the art to provide an initial burst of sweetness and flavor and/or therapeutic activity or a prolonged sensation of sweetness and flavor and/or therapeutic activity. Without being limited thereto, such physical forms can include spray dried, powdered, and beaded forms, and encapsulated forms, and mixtures thereof. Illustrative, but not limiting, examples of filling compositions suitable for use in some embodiments include those centers disclosed in U.S. Pat. Nos. 3,894,154, 4,156,740, 4,157,402, 4,316,915, and 4,466,983. Specific examples of suitable additional components include taurine, guarana, vitamins, Actizol™, chlorophyll, Recaldent™ tooth remineralization technology, and Retsyn™ .breath freshening technology.

In some embodiments, the filling composition includes sensates such as cooling compounds. Cooling compounds include those described in the "Active Agents - Sensates" section shown below. In some embodiments, cooling agents can be provided as liquids or can be dispersed in a liquid such as a liquid flavor composition. Liquid form cooling agents can be blended with the particulate material of the filling composition to provide an enhanced perception of cooling. In some embodiments, the enhanced perception of cooling includes a cooling intensity that is the same as the cooling intensity achieved with a lower amount of cooling agents than if the cooling agents were not blended with the particulate material. In some embodiments, the enhanced perception of cooling includes a cooling location in the throat rather than in the mouth.

In some embodiments, the filling composition also may include a natural or synthetic gum such as carboxymethylcellulose, pectin, propylene glycol alginate, agar and gum tragacanth. These ingredients serve to increase viscosity by reducing the amount of free water in the filling composition. The viscosity of the filling composition may range from about 300 centipoise (cp) to about 6,000 cp at 25°C. In filling compositions that have a greater water activity than the surrounding shell region, the viscosity may range from about 3,000 cp to about 6,000 cp at 25°C.

Xanthan gum may also be used to increase the viscosity of the filling composition. In some filling embodiments, increasing viscosity of the filling composition also helps prevent the filling from leaking through the confectionery piece. Xanthan gum is available under the trade name Keltrol® from Signet Chemical Corporation.

Some embodiments extend to methods of making the multi-region chewy confectionery compositions. The multi-region chewy confectionery composition may be prepared using standard techniques and equipment known to those skilled in the art.

In some embodiments, the first region or filling composition is prepared by dry blending one or more particulate materials by any method known to those of skill in the art. Such methods can include, but are not limited to, tumbling, ribbon blending or vibration. Methods for dry blending can be continuous, batch, or combinations of continuous with batch.

In some embodiments, particulate material can be combined with one or more carrier materials by any method know to those of skill in the art. Such methods can include, but are not limited to, mixing, homogenizing, and the like.

In some embodiments, the particulate material is combined with a non-aqueous carrier by melting the non-aqueous carrier and adding the particulate material to the melted carrier with mixing until the mixture is homogeneous. The non-aqueous carrier can be melted by applying heat or by creating heat through the friction of mixing.

In some embodiments, air can be incorporated into the filling composition. In some embodiments, air can be present in amounts of from about 0% w/w to about 50% w/v by volume of the filling composition.

Some apparatus useful in accordance with the embodiments described herein include mixing and heating apparatus well known in the confectionery manufacturing arts, and therefore the selection of the specific apparatus will be apparent to the artisan. Such methods and apparatus are disclosed, for example, in U.S. Pat. Nos. 3,806,290 and 3,857,963.

### Second Region or Shell Composition

The second region or shell composition comprises a soluble chewable matrix having a moisture content of from about 5% w/w to about 15% w/w by weight of said chewable matrix, wherein the second region at least partially surrounds the first region and may include one or more cavities each having a volume. These one or more cavities formed by the second region or shell composition can house the first region or filling composition. The shape of the one or more cavities will be largely dictated by the final configuration of the confectionery product.

In some embodiments, the first region fills at least 90% of the volume of the cavity formed by the second region or shell composition. Having a cavity filled to at least 90% of its volume helps stabilize the multi-region chewy confection from deformation.

The term "chewable matrix" as used herein refers to a composition including bulk sweetener(s), gelling agent(s), and fat(s) that provides a chewy texture. Such chewable matrix compositions are commonly referred to in the confectionery art as soft chewy candies, low boiled candy, soft boiled candy, and the like. Suitable chewable matrix compositions can include, but are not limited to, taffy, caramel, nougat, fudge, toffee, and marshmallow. The chewable matrix is soluble and is not meant to include compositions with insoluble components, such as chewing gum.

The shell composition includes one or more chewable matrices. In some embodiments, the shell composition includes one or more chewable matrices and one or more additional ingredients. For example, the shell composition can include a chewable matrix such as a caramel composition and an additional bulk sweetener such as erythritol or inclusions such as crisp rice, fruit bits, and the like and combinations thereof to create a desired chewy texture and/or flavor. Alternatively, the shell composition can include a combination of chewable matrices such as a combination of caramel and fudge.

The chewable matrix and/or shell composition can include sugar or sugarless bulk sweeteners. Bulk sweeteners are generally present in amounts of from about 40% w/w to about 95% w/w by weight of the chewable matrix and/or shell composition. In some embodiments, bulk sweeteners are present in amounts of from about 50% w/w to about 85% w/w by weight of the chewable matrix and/or shell composition.

Suitable sugar bulk sweeteners generally include mono-saccharides, di-saccharides and poly-saccharides such as but not limited to, sucrose (sugar), dextrose, maltose, dextrin, xylose, ribose, glucose, mannose, galactose, fructose (levulose), invert sugar, sucromalt, corn syrups, maltodextrins, oligo saccharide syrups, fructo oligo saccharide syrups, partially hydrolyzed starch, corn syrup solids, resistant starches, and mixtures thereof.

In some embodiments, sucrose and corn syrup are blended to form a bulk sweetener. In some embodiments, sucrose is present in the blend in an amount of from about 40% w/w to about 70% w/w by weight of the sucrose corn syrup blend. In other embodiments, sucrose is present in the blend in amounts of from about 45% w/w to about 65% w/w by weight of the sucrose corn syrup blend while in still other embodiments, sucrose is present in amounts of from about 50% to about 60% w/w by weight of the sucrose corn syrup blend.

Suitable sugarless bulk sweeteners include sugar alcohols (or polyols) such as, but not limited to, sorbitol, xylitol, mannitol, galactitol, maltitol, hydrogenated isomaltulose (isomalt), lactitol, erythritol, hydrogenated starch hydrolysates, polyglycitol, and mixtures thereof.

Isomalt is disaccharide alcohol. Isomalt can be prepared by hydrogenating isomaltulose. Products of the hydrogenation can include 6-O-α-D-glucopyranosyl-D-sorbitol (1,6-GPS); 1-O-α-D-glucopyranosyl-D-sorbitol (1,1-GPS); 1-O-α-D-glucopyranosyl-D-mannitol (1,1-GPM); 6-O-α-D-glucopyranosyl-D-mannitol (1,6-GPM); and mixtures thereof. Some commercially available isomalt materials include an almost equimolar mixture of 1,6-GPS, and 1,1-GPM. Other isomalt materials can include pure 1,6-GPS; 1,1-GPS; 1,6-GP; and 1,1-GPM. Still other isomalt materials can include mixtures of 1,6-GPS; 1,1-GPS; 1,6-GPM; and 1,1-GPM at any ratio.

Suitable hydrogenated starch hydrolysates include those disclosed in U.S. Patent No., 4,279,931 and various hydrogenated glucose syrups and/or powders that contain sorbitol, hydrogenated disaccharides, hydrogenated higher polysaccharides, or mixtures thereof. Hydrogenated starch hydrolysates are primarily prepared by the controlled catalytic hydrogenation of corn syrups. The resulting hydrogenated starch hydrolysates are mixtures of monomeric, dimeric, and polymeric saccharides. The ratios of these different saccharides give different hydrogenated starch hydrolysates different properties. Mixtures of hydrogenated starch hydrolysates, such as LYCASIN®, a commercially available product manufactured by Roquette Freres of France, and HYSTAR®, a commercially available product manufactured by SPI Polyols, Inc. of New Castle, Delaware, are also useful.

In some embodiments, the chewable matrix and/or shell composition is sugar free. The term "sugar free" as used herein refers to chewable matrix and/or shell compositions that do not contribute to dental caries. As such, sugar free shell compositions can include sugarless bulk sweeteners such as sugar alcohols. Sugar free shell compositions can also include sugars as long as the shell composition does not contribute to dental caries.

The chewable matrix and/or shell composition can include one or more gelling agents. As used herein, the term "gelling agent" refers to ingredients that are capable of forming a gel structure. Gelling agents are generally present in amounts of from about 1% w/w to about 10% w/w by weight of the chewable matrix and/or shell composition.

Suitable gelling agents can include hydrocolloids. Hydrocolloids can include naturally occurring materials such as plant exudates, seed gums, and seaweed extracts or they can be chemically modified materials such as cellulose, starch, or natural gum derivatives. In some embodiments, hydrocolloids can include pectin, gum arabic, acacia gum, alginates, agar, carrageenans, guar gum, xanthan gum, locust bean gum, gelatin, gellan gum, cassia gum, galactomannans, tragacanth gum, karaya gum, curdlan, konjac, chitosan, xyloglucan, beta glucan, furcellaran, gum ghatti, tamarin, bacterial gums, and combinations thereof. Additionally, in some embodiments, modified natural gums such as propylene glycol alginate, carboxymethyl locust bean gum, low methoxyl pectin, and their combinations can be included. In some embodiments, modified celluloses can be included such as microcrystalline cellulose, carboxymethylcellulose (CMC), methylcellulose (MC), hydroxypropylmethylcellulose (HPCM), and hydroxypropylcellulose (MPC), and combinations thereof. In some embodiments, the gelling agent can include pectin, alginate, carrageenan, gelatin, guar gum, carboxymethylcellulose, xanthan, and combinations thereof.

The chewable matrix and/or shell composition can include one or more chew texture modifying agents. As used herein, the term "chew texture modifying agent" refers to ingredients that are capable of altering the texture of a gel. Chew texture texturizing agents can also be known to those skilled in the art as thickeners. Chew texture texturizing agents tend to have low gelling ability but can affect the chew texture created by gelling agents. Chew texture texturizing agents are generally present in amounts of from about 1% w/w to about 10% w/w by weight of the chewable matrix and/or shell composition. Suitable chew texture modifying agents can include gum arabic, gum ghatti, starch, gum tragacanth, and combinations thereof.

In some embodiments, an ingredient can function as a chew texture modifying agent when used at a level different than the level used to function as a gelling agent. For example, gum tragacanth or xanthan when used at a level of about 1% w/w by weight of the chewable matrix and/or shell composition can function as a chew texture modifying agent whereas when used at a level of about 4% w/w by weight of the chewable matrix and/or shell composition, gum tragacanth can function as a gelling agent to form a thick gel.

The chewable matrix and/or shell composition can include one or more fat. As used herein, the term "fat" refers to any lipid material and can be solid or liquid. Suitable fats can include those of vegetable origin, animal origin, or mixtures thereof. Suitable vegetable fats can include soybean fats, cottonseed fats, com fats, almond fats, peanut fats, sunflower fats, rapeseed fats, olive fats, palm fats, palm kernel fats, illipe fats, shea fats, coconut fats, cocoa butter fats and mixtures thereof. It will be understood by those skilled in the art and these vegetable fats can be hydrogenated to varying degrees as desired. Suitable animal fats can include dairy fats such as milk fat and butter. Fats are generally present in amounts of from about 1 % w/w to about 20% w/w by weight of the chewable matrix and/or shell composition. In some embodiments, the fat is present in amount of from about 3% w/w to about 15% w/w by weight of the chewable matrix and/or shell composition.

The chewable matrix and/or shell composition has a moisture content of from about 5% w/w to about 15% w/w by weight of the chewable matrix and/or shell composition. In some embodiments, the chewable matrix and/or shell composition has a water activity of from about 40% to about 65% ERH.

In some embodiments, the chewable matrix and/or shell composition provides a chewy texture that can be measured using sensory evaluation techniques. Sensory evaluation techniques are described in texts such as *Sensory Evaluation of Food: Principles* & *Practices,* by Harry T. Lawless and Hildegarde Heymann. Suitable sensory evaluation techniques include quantitative descriptive analysis (QDA). To conduct QDA testing, a panel of respondents may be assembled. Attribute terms for evaluation of samples are selected. Normally, ballot development and respondent training is carried out initially. Descriptive terms are developed for major sensory attribute categories. Exemplary attribute qualities can include aroma, flavor, texture, aftertaste, sweetness, and the like and combinations thereof. Attributes are quantified with a linear intensity scale of from, e.g. 0 to 10; where 0 indicates that the attribute is not detected and 10 indicates that the attribute is extremely strong. Overall quality rating may be measured with a linear scale of from, e.g. 1 to 10 where less than 6 is considered "poor," 6 to 7 is "fair," and 8 to 10 is "good."

Physical reference standards are determined by a panel consensus so that proper descriptive language may be developed. Panelists may be trained in evaluating certain samples until a consensus is attained.

Overall quality ratings and quantified intensity ratings may be statistically analyzed with such programs as Minitab ver. 12 or SAS ver. 6.11. Descriptive statistical measures may be calculated for all attributes. Analysis of variance may be performed on each attribute using a randomized block design for balanced data with panelists as repeated measures as described by Ott, "Analysis of variance for some standard experimental designs," pp. 844-856 in An Introduction to Statistical Methods and Data Analysis. Wadsworth Publishing. Belmont, Calif. Where F-test indicates a significant difference between treatment means, Tukey paired comparisons and orthogonal comparisons may be used to determine where the means are different. Significance of differences may be defined as P less than 0.05. Principal components analysis (PCA) may be applied with the factor analysis described by Lawless and Heymann, 1998, pp. 606-608 in Sensory Evaluation of Food: Principles and Practices. Chapman & Hall, New York, 1998. PCA may be applied to the attributes. Attributes may be omitted if the values are consistently low indicating that the attribute is not often present, if the attribute has a high standard deviation or if the attribute is highly correlated to another attribute. Kaiser's criterion may be applied (eigen value greater than 1) to determine the number of final factors from the initial ones as described by Massart et al., "Principal components and factor analysis," pp. 339-369 in Chemometrics: A Textbook. Elsevier, Amsterdam, 1988. To facilitate the interpretation of results, the factors may be orthogonally rotated leading to uncorrelated factors following the Varimax method described by Massart et al., supra.

In some embodiments, the texture of the chewable matrix and/or shell composition has a chewiness rating of between 3 and 7 on a line scale of 1 to 10 as measured by QDA. As used herein, the term "chewiness' refers to a quantitative descriptive analysis metric that is an integrated term measuring texture attributes that contribute to increased chew effort including, but not limited to, toughness, density, and stickiness.

In some embodiments, the texture of chewable matrix and/or shell composition has a texture hardness of less than 7 on a line scale of 1 to 10 as measured by quantitative descriptive analysis. As used herein, the term "texture hardness" refers to a quantitative descriptive analysis metric that measures the force required to chew down through a product sample using the molars. Texture hardness of less than 7 on a line scale of 1 to 10 provides a chewable matrix and/or shell composition that is softer than hard boiled candy.

In some embodiments, the texture of the chewable matrix and/or shell composition has a texture hardness of from about 3 to about 7 on a line scale of 1 to 10 as measured by quantitative descriptive analysis. Texture hardness of from about 3 to about 7 on a line scale of 1 to 10 provides a chewable matrix and/or shell composition that is hard enough to withstand confectionery processing operations such as, but not limited to, forming, cutting, coating, wrapping, and packaging.

In addition to sensory methods for measuring texture hardness of the chewable matrix and/or shell composition as described above, texture hardness can also be measured by conventional analytical techniques such as by using texture analyzers.

Suitable texture analyzers can include the TA-XT Plus™ texture analyzer available from Stable Micro Systems Ltd. of Godalming, Surrey, UK. Analytical texture hardness for confectionery can be measured using a 6mm. cylinder probe with a 25 kg. load cell on samples equilibrated to 20°C. The samples are placed on the platform of the texture analyzer and the probe is set to penetrate the sample to a depth of 2mm. The values expressed in grams of force of 10 samples are averaged to provide a mean maximum positive force value. This mean maximum positive force is referred to as "analytical texture hardness".

In some embodiments, the chewable matrix and/or shell composition has an analytical texture hardness of from about 3,000 gm. of force to about 13,000 gm. of force as measured by a texture analyzer. In other embodiments, the chewable matrix and/or shell composition has an analytical texture hardness of from about 5,000 gm. of force to about 11,000 gm. of force as measured by a texture analyzer while in still other embodiments, the chewable matrix and/or shell composition has an analytical texture hardness of from about 7,000 gm. of force to about 10,000 gm. of force as measured by a texture analyzer.

The chewable matrix and/or shell composition can also include suitable amounts of other confectionery components known to those of skill in the art such as, but not limited to, emulsifiers, flavors, sweeteners, colors, viscosity modifiers, acids, aerating agents, proteins, fruit juices and other fruit materials, and the like.

Suitable emulsifiers can include, but are not limited to, lecithin or other phospholipids, polyglycerol polyricinoleate, monoglycerides, diglycerides, sodium steoryl lactylate, citric acid esters of monoglycerides and diglycerides, distilled monoglycerides, acetylated monoglycerides, mono- and di-glycerides of C₁₆-C₂₀ fatty acids such as glyceryl monostearate, glycerol triacetate, fatty acids, sucrose esters, and combinations thereof.

Suitable sweeteners can include high intensity sweeteners. Without being limited to particular sweeteners, representative categories and examples include:
(a) water-soluble sweetening agents such as dihydrochalcones, monellin, steviosides and stevia derived compounds such as but not limited to rebaudiocide A, iso-mogroside V and the like, lo han quo and lo han quo derived compounds, glycyrrhizin, dihydroflavenol, and sugar alcohols such as sorbitol, mannitol, maltitol, xylitol, erythritol, and L-aminodicarboxylic acid aminoalkenoic acid ester amides, such as those disclosed in U.S. Pat. No. 4,619,834, and mixtures thereof;
(b) water-soluble artificial sweeteners such as soluble saccharin salts, i.e., sodium or calcium saccharin salts, cyclamate salts, the sodium, ammonium or calcium salt of 3,4-dihydro-6-methyl-1,2,3-oxathiazine-4-one-2,2-dioxide, the potassium salt of 3,4-dihydro-6-methyl-1,2,3-oxathiazine-4-one-2,2-dioxide (Acesulfame-K), the free acid form of saccharin, and mixtures thereof;
(c) dipeptide based sweeteners, such as L-aspartic acid derived sweeteners, such as L-aspartyl-L-phenylalanine methyl ester (Aspartame), N-[N-(3,3-dimethylbutyl)-L-α-aspartyl]-L-phenylalanine 1-methyl ester (Neotame), and materials described in U.S. Pat. No. 3,492,131, L-alphaaspartyl-N-(2,2,4,4-tetramethyl-3-thietanyl)-D-alaninamide hydrate (Alitame), methyl esters of L-aspartyl-L-phenylglycerin and L-aspartyl-L-2,5-dihydrophenyl-glycine, L-aspartyl-2,5-dihydro-L-phenylalanine; L-aspartyl-L-(1-cyclohexen)-alanine, and mixtures thereof;
(d) water-soluble sweeteners derived from naturally occurring water-soluble sweeteners, such as chlorinated derivatives of ordinary sugar (sucrose), e.g., chlorodeoxysugar derivatives such as derivatives of chlorodeoxysucrose or chlorodeoxygalactosucrose, known, for example, under the product designation of Sucralose or Splenda™; examples of chlorodeoxysucrose and chlorodeoxygalactosucrose derivatives include but are not limited to: l-chloro-l'-deoxysucrose; 4-chloro-4-deoxy-alpha-D-galactopyranosyl-alpha-D-fructofuranoside, or 4-chloro-4-deoxygalactosucrose; 4-chloro-4-deoxy-alpha-D-galactopyranosyl-1-chloro-1-deoxy-beta-D-fructo-furanoside, or 4,1'-dichloro-4,1'-dideoxygalactosucrose; 1',6'-dichloro 1',6'-dideoxysucrose; 4-chloro-4-deoxy-alpha-D-galactopyranosyl-1,6-dichloro-1,6-dideoxy-beta-D- fructofuranoside, or 4,1',6'-trichloro-4,1',6'-trideoxygalactosucrose; 4,6-dichloro-4,6-dideoxy-alpha-D-galactopyranosyl-6-chloro-6-deoxy-beta-D- fructofuranoside, or 4,6,6'-trichloro-4,6,6'-trideoxygalactosucrose; 6,1',6'-trichloro-6,1',6'-trideoxysucrose; 4,6-dichloro-4,6-dideoxy-alpha-D-galacto-pyranosyl-1,6-dichloro-1,6-dideox y-beta-D-fructofuranoside, or 4,6,1',6'-tetrachloro4,6,1',6'-tetradeoxygalacto-sucrose; and 4,6,1',6'-tetradeoxy-sucrose, and mixtures thereof;
(e) protein based sweeteners such as miraculin, extracts and derivatives of extracts of *Synseplum dulcificum,* mabinlin, curculin, monellin, brazzein, pentadin, extracts and derivatives of extracts of *Pentadiplandra brazzeana,* thaumatin, thaumaoccous danielli (Thaumatin I and II) and talin;
(f) the sweetener monatin (2-hydroxy-2-(indol-3-ylmethyl)-4-aminoglutaric acid) and its derivatives or isomers; and
(g) the sweetener Lo han guo (sometimes also referred to as "Lo han kuo").

The intense sweetening agents may be used in many distinct physical forms well-known in the art to provide an initial burst of sweetness and/or a prolonged sensation of sweetness. Without being limited thereto, such physical forms include free forms, spray dried forms, powdered forms, beaded forms, encapsulated forms, and mixtures thereof. In one embodiment, the sweetener is a high intensity sweetener such as aspartame, sucralose, and acesulfame potassium (e.g., Ace-K or acesulfame-K).

Suitable acids can include, but are not limited to, acetic acid, adipic acid, ascorbic acid, butyric acid, citric acid, formic acid, fumaric acid, glyconic acid, lactic acid, phosphoric acid, malic acid, oxalic acid, succinic acid, tartaric acid and combinations thereof.

A variety of traditional ingredients also may be included in the chewable matrix and/ or shell composition in effective amounts such as coloring agents, antioxidants, preservatives, and the like. Coloring agents may be used in amounts effective to produce the desired color. The coloring agents may include pigments that may be incorporated in amounts up to about 6%, by weight of the composition. For example, titanium dioxide may be incorporated in amounts up to about 2%, and preferably less than about 1%, by weight of the composition. The colorants may also include natural food colors and dyes suitable for food, drug and cosmetic applications. These colorants are known as F.D. & C. dyes and lakes. The materials acceptable for the foregoing uses are preferably water-soluble. Illustrative nonlimiting examples include the indigoid dye known as F.D. & C. Blue No.2, which is the disodium salt of 5,5-indigotindisulfonic acid. Similarly, the dye known as F.D.& C. Green No. 1 includes a triphenylmethane dye and is the monosodium salt of 4-[4-(N-ethyl-p-sulfoniumbenzylamino)diphenylmethylene]-[1-(N-ethyl-N-p-sulfoniumbenzyl)-delta-2,5-cyclohexadieneimine]. A full recitation of all F.D.& C. colorants and their corresponding chemical structures may be found in the Kirk-Othmer Encyclopedia of Chemical Technology, 3rd Edition, in volume 5 at pages 857-884.

Lubricants also may be added in some embodiments to improve the smoothness of the chewable matrix and/or shell composition. Suitable lubricants include, but are not limited to, fats, oils, aloe vera, pectin and combinations thereof.

Other conventional additives known to one having ordinary skill in the art also may be used in the chewable matrix and/or shell composition.

Some embodiments are directed to methods of preparing chewable matrix and/or shell compositions. In some embodiments, a chewable matrix composition is prepared and then a shell composition is prepared by adding one or more additional components to the chewable matrix composition. Such chewable matrix and/or shell compositions may be prepared using conventional apparatus such as mixers, blenders, homogenizers, fire cookers, cooking extruders, and/or vacuum cookers.

In accordance with some embodiments, the bulk sweeteners, as well as a solvent (e.g., water), are combined in a mixing vessel to form a slurry. The slurry is heated to about 70°C to 120°C to dissolve any sweetener crystals or particles and form an aqueous solution. Once dissolved, heat at temperatures of about 135°C to 160°C and vacuum are applied to cook the batch and boil off water until a residual moisture of less than about 4% is achieved. The batch changes from a crystalline to an amorphous phase. After the desired moisture level has been achieved, the batch is cooled and hydrated gelling agent is added and mixed until homogeneous. The optional flavor agents, cooling agents and the like are then admixed in the batch by mechanical mixing operations, along with any other optional additives, such as coloring agents.

The optimum mixing required to uniformly mix the sweeteners, flavors, cooling agents, colorants and other additives during manufacturing of a chewable matrix and/or shell composition is determined by the time needed to obtain a uniform distribution of the materials. Normally, mixing times of from four to ten minutes have been found to be acceptable.

In some embodiments, the batch is then cooled to about 100°C to 20°C to attain a semi-solid or plastic-like consistency. In some embodiments, the batch can be pulled to obtain a desired texture. In some embodiments, the hydrated gelling agent(s) can be added to the batch after the batch has been mixed and pulled.

Once the chewable matrix and/or shell composition mass has been properly tempered, it may be cut into workable portions or formed into desired shapes having the correct weight and dimensions. A variety of forming techniques may be utilized depending upon the shape and size of the final product desired. Once the desired shapes are formed, cool air is applied to allow the comestibles to set uniformly, after which they may be incorporated into a multi-region product, wrapped and packaged.

In other embodiments, the mixed batch is deposited into molds of any desired shape and size. Cool air then may be applied to allow the molded comestibles to set uniformly, after which the comestibles may be removed, incorporated into a multi-region product, wrapped and packaged.

The apparatus useful in accordance with some embodiments includes cooking and mixing apparatus well known in the confectionery manufacturing arts, and selection of the specific apparatus will be apparent to one skilled in the art.

### Third Region or Coating Composition

The coating composition, also referred to as the coating, may include any conventional ingredient such as, but not limited to, sweeteners, flavors, sensates, functional ingredients, and food acids. In some embodiments, the coating composition may be in particulate form, crystalline form, or amorphous form. In some embodiments, the coating composition may be continuous or discontinuous. In some embodiments, the coating may completely surround, coat, cover, or enclose a multi-region chewy confection. In other embodiments, the coating may only partially surround, coat, cover, or enclose a multi-region chewy confection.

The coating surrounds at least a portion of the multi-region chewy confectionery region. The coating may be applied by any method known in the art. The coating composition may be present in an amount from about 2% to about 60%, more specifically from about 25% to about 35% by weight of the total multi-region chewy confectionery piece, even more specifically about 20% by weight of the piece.

The selection of the form of the coating composition may depend on the desired texture of the confectionery composition. The coating may be hard, crunchy, crispy, gritty, or soft. Typically, the coating may include sorbitol, maltitol, xylitol, erythritol, isomalt, and other crystallizable polyols; sucrose or dextrose may also be used. Furthermore the coating may include several opaque layers, such that the multi-region chewy confectionery composition is not visible through the coating itself, which can optionally be covered with a further one or more transparent layers for aesthetic, textural and protective purposes. The coating may also contain small amounts of water and gum arabic. The coating can be further coated with wax.

The coating may be applied in a conventional manner including by successive applications of a coating solution, with drying in between each coat. As the coating dries it usually becomes opaque and is usually white, though other colorants may be added. The coating can be further coated with wax. The coating can further include colored flakes or speckles. If the multi-region chewy confectionery composition includes a coating, it is possible that one or more active agents can be dispersed throughout the coating. This is especially preferred if one or more active agents is incompatible in one region of the multi-region chewy confectionery composition and/or with another of the actives in another region of the multi-region chewy confectionery composition. Flavors may also be added to the coating to yield unique product characteristics.

In some embodiments, the coating may also be formulated to assist with increasing the stability of the multi-region chewy confectionery composition and preventing leaking of the filling composition. In some embodiments, the coating may include a gelatin composition. The gelatin composition may be added as a 40% by weight solution and may be present in the coating composition from about 5% to about 10% by weight of the coating composition, and more specifically about 7% to about 8%. The gel strength of the gelatin may be from about 130 bloom to about 250 bloom.

Other materials may be added to the coating to achieve desired properties. These materials may include without limitation, cellulosics such as carboxymethyl cellulose, gelatin, pullulan, alginate, starch, carrageenan, xanthan gum, gum arabic and polyvinyl acetate (PVA).

In some embodiments, the coating can include a barrier layer. As used herein, the term "barrier layer" refers to any material that limits moisture and/or fat migration between the regions of the multi-region confectionery composition. The barrier layer can be applied as a separate composition or it can be part the filling, shell, and/or coating compositions.

For example, in some embodiments, the barrier layer includes a fat such as medium chain triglycerides that is applied to the shell composition prior to combining the shell and filling compositions or prior to applying a coating composition. In other embodiments, the barrier layer can be a water insoluble material such as fat or wax that encapsulates a moisture sensitive component of the filling, shell and/or coating composition such as citric acid. In some embodiments, the barrier layer can include, but is not limited to, fats, oils, waxes, chocolate, compound coating, and combinations thereof.

In some embodiments, the barrier layer can include a hydrocolloid. Suitable hydrocolloids can include, but are not limited to, guar gum, locust bean gum, gum arabic, gellan gum, gum tragacanth, carrageenan, wheat flour, and combinations thereof.

In some embodiments, the coating composition can include a coating texture modifying agent. As used herein, the term "coating texture modifying agent" refers to any material that is capable of altering the texture of the coating composition. Suitable coating texture modifying agents include starches such as oxidized starches. In some embodiments, the oxidized starch includes an oxidized waxy maize starch. In some embodiments, the coating texture modifying agent is present in an amount of from about 0.5% w/w to about 5% w/w by weight of the coating composition.

Various other coating compositions and methods of making are also contemplated including but not limited to hard panning or hard coating, soft panning or soft coating, dual or multiple extrusion, lamination, sanding, dusting, and the like and combinations thereof. Thus, in some embodiments, the coating can be amorphous or crystalline and the resulting texture can be hard, crunchy, crispy, soft, gritty, or chewy.

In some embodiments, the coating composition may include one or more sweeteners, and/or one or more flavors, and/or one or more sensates, and/or one or more salts, and/or one or more functional ingredients, and/or one or more food acids. In some embodiments, the one or more sweeteners, and/or one or more flavors, and/or one or more sensates, and/or one or more functional ingredients, and/or one or more food acids may be encapsulated, unencapsulated (or "free") or a combination of encapsulated and unencapsulated.

In still other embodiments, the coating composition may include a particulate material and thus may be in particulate form and may include one or more sweeteners, and/or one or more flavors, and/or one or more sensates, and/or one or more salts, and/or one or more functional ingredients, and/or one or more food acid materials. In some embodiments, the particulate materials can have similar particle sizes such that if they are mixed together, they form a homogeneous blend. The term "sanding composition" as used herein refers to coating compositions in particulate form.

In some embodiments, the application of a particulate coating to the exterior of a multi-region chewy confection may be accomplished by using moisture such as by steam treating the confection or by applying a binder syrup and then applying the particulate coating in a tumbling operation. In some embodiments, the application of a particulate coating to the exterior of a confection may be accomplished by wetting the surface of the confection through the application of a liquid prior to application of the particulate coating. The liquid used to wet the surface of the confection may be aqueous, non-aqueous, or a combination. In some embodiments, the particulate coating may be embedded into the surface of the confection while in other embodiments, the particulate adheres to the confection without being embedded. This process of surface treatment may also be known as sanding.

In some embodiments, the coating composition may adhere to the surface of the confection due to electrostatic adhesion. In some embodiments, application of the particulate coating may be accomplished by physical contact between the surface or surfaces of the confection and the particulate coating without wetting the surface(s) of the confection and with subsequent removal of the excess particulates. In some embodiments, excess particulate coating may be removed from the surface of the confection by applying vacuum, by brushing, and by other like processes. This process may also be known as dusting.

In embodiments where the coating may be in particulate form, additional components such as food acid or flavor or sensate or sweetener or salt or functional ingredient materials may be present in an amount from about 0.05% w/w to about 20% w/w, preferably from about 5% w/w to about 15% w/w of the coating composition.

In some embodiments, the coating may also include a saccharide such as a sugar or sugar alcohol (polyol) or a combination of saccharide(s) and polyol(s). Suitable saccharides may include, but are not limited to, mono-saccharides, di-saccharides and poly-saccharides such as but not limited to, sucrose (sugar), dextrose, maltose, dextrin, xylose, ribose, glucose, mannose, galactose, sucromalt, fructose (levulose), invert sugar, corn syrups, maltodextrins, fructo oligo saccharide syrups, partially hydrolyzed starch, corn syrup solids, polydextrose, soluble fibers, insoluble fibers, and mixtures thereof.

Suitable polyols may include, but not limited to, sorbitol, xylitol, mannitol, galactitol, maltitol, hydrogenated isomaltulose (ISOMALT), lactitol, erythritol, hydrogenated starch hydrolysates, maltitol syrups, and mixtures thereof.

In some embodiments, the coating with the sugars and/or polyols may be particulate form.

In some embodiments, the coating composition may be in particulate form and may include encapsulated ingredients as described below.

In embodiments where the coating composition is in crystalline or amorphous form, the coating may be created by any conventional method known in the coating art. Such methods may include, but are not limited to, hard panning, soft panning, enrobing, spray coating, lamination, co-extrusion, multiple-extrusion, drum sanding, thin film depositing, and the like. As with the particulate coating compositions, crystalline or amorphous coating compositions may include sweeteners and food acids and may be created to provide sour taste intensities equivalent to 0.2 % w/w solution of citric and/ or a sour taste intensity of at least 4 on a scale from 0 to 10.

In some embodiments, the coating composition has a negative heat of solution. Heat of solution refers to the amount of heat required to dissolve one gram of a solute. When a material gives off energy upon dissolving, it is said to have a negative heat of solution. Materials with negative heats of solution provide a cooling solution upon dissolving.

In some embodiments, the coating composition may be included in the confectionery composition in amounts from about 1 percent by weight of the total composition to about 75 percent of the total composition. In some embodiments, the coating composition may be included in the coated multi-region chewy confectionery composition in amounts of from about 5 percent by weight of the total composition to about 15 percent by weight of the total composition.

In some embodiments, multi-region chewy confectionery products include an acidic particulate coating. The moisture content of a multi-region chewy confection can be greater than the moisture content of a chewy confection without a filling. In some embodiments, the higher moisture content of a multi-region chewy confection creates a need for a coating that will not pull moisture out of the multi-region chewy confection. In some embodiments, a coating can be in a particulate form that at least partially covers the multi-region chewy confection. In some embodiments, partially or completely encapsulating an ingredient used in a confectionery composition with an encapsulating material may stabilize the ingredient against moisture absorption and/or moisture migration.

In some embodiments, the first region or filling composition, or the second region or chewable matrix and/or shell composition, or both are manipulated to withstand the coating process.

The first region or filling composition can be formulated to increase its ability to become densely packed. Having a densely packed first region can minimize deformation of the multi-region chewy confection during coating. Factors that increase the first region's ability to become densely packed can include, but are not limited to, type of particulate material, average particle size, particle size distribution, and particle shape. One indication of ability to become densely packed is the difference between the bulk density and the tap density as described above.

The second region or shell composition can also be manipulated to resist deformation. Factors that increase the second region's ability to resist deformation include, but are not limited to, moisture content, type of gelling agent, amount of gelling agent, type of chew texture modifying agent, amount of chew texture modifying agent, type of fat, amount of fat, type of saccharide, and amount of saccharide. One indication of the second region's ability to resist deformation is the texture hardness of the second region as measured by QDA as described above. In some embodiments, texture hardness of from about 4 to about 7 on a 10 point scale provides sufficient resistance against deformation.

To provide an organoleptically acceptable multi-region chewy confection, it may be necessary to balance the dense packing of the first region with the hardness of the second region. In some embodiments, a more densely packed first region can allow for a softer second region. If, however, densely packing the first region results in unacceptable dissolution time, then the second region can be manipulated to have a harder texture.

In some embodiments, the third region or coating composition provides a desired texture. In some embodiments, the desired texture is a crispness that can be measured by sensory techniques such as those described above. In some embodiments, the third region or coating composition has a crispness of at least 3 on a scale of 1 to 10 as measured by quantitative descriptive analysis. As used herein, the term "crispness" refers to a quantitative descriptive analysis metric that measures the force with which the coating breaks or fractures (rather than deforms) on initial chew using the molars.

In some embodiments, the multi-region confectionery composition can include a fourth region that may completely surround, coat, cover, or enclose the third region of a multi-region chewy confection. In other embodiments, the fourth region may only partially surround, coat, cover, or enclose the third region of a multi-region chewy confection In some embodiments, the fourth region may be continuous or discontinuous.

In some embodiments, the third region includes a non-particulate coating composition and the fourth region includes a particulate coating composition. In some such embodiments, the third region is a soft coating while in other embodiments, the third region is a hard coating. In some such embodiments, the fourth region includes a sanding composition.

### Active Agents

Active agents, such as warming agents, cooling agents, tingling agents, flavors, sweeteners, sour tastes, bitter tastes, salty tastes, surfactants, breath freshening agents, anti-microbial agents, anti-bacterial agents, anti-calculus agents, antiplaque agents, fluoride compounds, remineralization agents, pharmaceuticals, micronutrients, throat care actives, tooth whitening agents, energy boosting agents, concentration boosting agents, appetite suppressants, colors and other actives may also be included in any or all portions or regions of the multi-region chewy confection. Such components may be used in amounts sufficient to achieve their intended effects.

### Active Agents - Flavors

In some embodiments, flavorants may include those flavors known to the skilled artisan, such as natural and artificial flavors. These flavorings may be chosen from synthetic flavor oils and flavoring aromatics and/or oils, oleoresins and extracts derived from plants, leaves, flowers, fruits, and so forth, and combinations thereof. Nonlimiting representative flavor oils include spearmint oil, cinnamon oil, oil of wintergreen (methyl salicylate), peppermint oil, Japanese mint oil, clove oil, bay oil, anise oil, eucalyptus oil, thyme oil, cedar leaf oil, oil of nutmeg, allspice, oil of sage, mace, oil of bitter almonds, and cassia oil. Also useful flavorings are artificial, natural and synthetic fruit flavors such as vanilla, and citrus oils including lemon, orange, lime, grapefruit, yazu, sudachi, and fruit essences including apple, pear, peach, grape, blueberry, strawberry, raspberry, cherry, plum, pineapple, apricot, banana, melon, apricot, ume, cherry, raspberry, blackberry, tropical fruit, mango, mangosteen, pomegranate, papaya and so forth. Other potential flavors include a milk flavor, a butter flavor, a cheese flavor, a cream flavor, and a yogurt flavor; a vanilla flavor; tea or coffee flavors, such as a green tea flavor, a oolong tea flavor, a tea flavor, a cocoa flavor, a chocolate flavor, and a coffee flavor; mint flavors, such as a peppermint flavor, a spearmint flavor, and a Japanese mint flavor; spicy flavors, such as an asafetida flavor, an ajowan flavor, an anise flavor, an angelica flavor, a fennel flavor, an allspice flavor, a cinnamon flavor, a chamomile flavor, a mustard flavor, a cardamom flavor, a caraway flavor, a cumin flavor, a clove flavor, a pepper flavor, a coriander flavor, a sassafras flavor, a savory flavor, a Zanthoxyli Fructus flavor, a perilla flavor, ajuniper berry flavor, a ginger flavor, a star anise flavor, a horseradish flavor, a thyme flavor, a tarragon flavor, a dill flavor, a capsicum flavor, a nutmeg flavor, a basil flavor, a marjoram flavor, a rosemary flavor, a bayleaf flavor, and a wasabi (Japanese horseradish) flavor; alcoholic flavors, such as a wine flavor, a whisky flavor, a brandy flavor, a rum flavor, a gin flavor, and a liqueur flavor; floral flavors; and vegetable flavors, such as an onion flavor, a garlic flavor, a cabbage flavor, a carrot flavor, a celery flavor, mushroom flavor, and a tomato flavor. These flavoring agents may be used in liquid or solid form and may be used individually or in admixture. Commonly used flavors include mints such as peppermint, menthol, spearmint, artificial vanilla, cinnamon derivatives, and various fruit flavors, whether employed individually or in admixture. Flavors may also provide breath freshening properties, particularly the mint flavors when used in combination with the cooling agents, described herein below.

In some embodiments, other flavorings include aldehydes and esters such as cinnamyl acetate, cinnamaldehyde, citral diethylacetal, dihydrocarvyl acetate, eugenyl formate, p-methylamisol, and so forth may be used. Generally any flavoring or food additive such as those described in Chemicals Used in Food Processing, publication 1274, pages 63-258, by the National Academy of Sciences, may be used. These may include natural as well as synthetic flavors.

Further examples of aldehyde flavorings include but are not limited to acetaldehyde (apple), benzaldehyde (cherry, almond), anisic aldehyde (licorice, anise), cinnamic aldehyde (cinnamon), citral, i.e., alpha-citral (lemon, lime), neral, i.e., beta-citral (lemon, lime), decanal (orange, lemon), ethyl vanillin (vanilla, cream), heliotrope, i.e., piperonal (vanilla, cream), vanillin (vanilla, cream), alpha-amyl cinnamaldehyde (spicy fruity flavors), butyraldehyde (butter, cheese), valeraldehyde (butter, cheese), citronellal (modifies, many types), decanal (citrus fruits), aldehyde C-8 (citrus fruits), aldehyde C-9 (citrus fruits), aldehyde C-12 (citrus fruits), 2-ethyl butyraldehyde (berry fruits), hexenal, i.e., trans-2 (berry fruits), tolyl aldehyde (cherry, almond), veratraldehyde (vanilla), 2,6-dimethyl-5-heptenal, .e., melonal (melon), 2,6-dimethyloctanal (green fruit), and 2-dodecenal (citrus, mandarin), cherry, grape, blueberry, blackberry, strawberry shortcake, and mixtures thereof.

In some embodiments, flavoring agents are used at levels that provide a perceptible sensory experience i.e. at or above their threshold levels. In other embodiments, flavoring agents are used at levels below their threshold levels such that they do not provide an independent perceptible sensory experience. At subthreshold levels, the flavoring agents may provide an ancillary benefit such as flavor enhancement or potentiation.

In some embodiments, a flavoring agent may be employed in either liquid form and/or dried form. When employed in the latter form, suitable drying means such as spray drying the liquid may be used. Alternatively, the flavoring agent may be absorbed onto water soluble materials, such as cellulose, starch, sugar, maltodextrin, gum arabic and so forth or may be encapsulated. In still other embodiments, the flavoring agent may be adsorbed onto silicas, zeolites, and the like.

In some embodiments, the flavoring agents may be used in many distinct physical forms. Without being limited thereto, such physical forms include free forms, such as spray dried, powdered, beaded forms, encapsulated forms, and mixtures thereof.

### Active Agents - Sensates

Sensate compounds can include cooling agents, warming agents, tingling agents, effervescent agents, and combinations thereof. A variety of well known cooling agents may be employed. For example, among the useful cooling agents are included xylitol, erythritol, dextrose, sorbitol, menthane, menthone, ketals, menthone ketals, menthone glycerol ketals, substituted p-menthanes, acyclic carboxamides, mono menthyl glutarate, substituted cyclohexanamides, substituted cyclohexane carboxamides, substituted ureas and sulfonamides, substituted menthanols, hydroxymethyl and hydroxymethyl derivatives of p-menthane, 2-mercapto-cyclo-decanone, hydroxycarboxylic acids with 2-6 carbon atoms, cyclohexanamides, menthyl acetate, menthyl salicylate, N,2,3-trimethyl-2-isopropyl butanamide (WS-23), N-ethyl-p-menthane-3-carboxamide (WS-3), ethyl ester of N-[[5-methyl-2-(1-methylethyl)cyclohexyl]carbonyl]glycine (WS5), as well as the substantially pure ethyl ester of N-[[5-methyl-2-(1-methylethyl)cyclohexyl]carbonyl]glycine as disclosed in U.S. Patent No. 7,189760 to Erman, et al., which is incorporated in its entirety herein by reference, isopulegol, menthyloxy propane diol, 3-(1-menthoxy)propane-1,2-diol, 3-(1-menthoxy)-2-methylpropane-1,2-diol, p-menthane-2,3-diol, p-menthane-3,8-diol, 6-isopropyl-9-methyl-1,4-dioxaspiro[4,5]decane-2-methanol, menthyl succinate and its alkaline earth metal salts, trimethylcyclohexanol, N-ethyl-2-isopropyl-5-methylcyclohexanecarboxamide, Japanese mint oil, peppermint oil, 3-(1-menthoxy)ethan-1-ol, 3-(1-menthoxy)propan-1-ol, 3-(1-menthoxy)butan-1-ol, 1-menthylacetic acid N-ethylamide, 1-menthyl-4-hydroxypentanoate, 1-menthyl-3-hydroxybutyrate, N,2,3-trimethyl-2-(1-methylethyl)-butanamide, n-ethyl-t-2-c-6 nonadienamide, N,N-dimethyl menthyl succinamide, substituted p-menthanes, substituted p-menthane-carboxamides, 2-isopropanyl-5-methylcyclohexanol (from Hisamitsu Pharmaceuticals, hereinafter "isopregol"); menthone glycerol ketals (FEMA 3807, tradename FRESCOLAT® type MGA); 3-1-menthoxypropane-1,2-diol (from Takasago, FEMA 3784); and menthyl lactate; (from Haarman & Reimer, FEMA 3748, tradename FRESCOLAT® type ML), WS-30, WS-14, Eucalyptus extract (p-Mehtha-3,8-Diol), Menthol (its natural or synthetic derivatives), Menthol PG carbonate, Menthol EG carbonate, Menthol glyceryl ether, N-tertbutyl-p-menthane-3-carboxamide, P-menthane-3-carboxylic acid glycerol ester, Methyl-2-isopryl-bicyclo (2.2.1), Heptane-2-carboxamide; Menthol methyl ether, menthyl pyrrolidone carboxylate; 2,5-dimethyl-4-(1-pyrrolidinyl)-3(2H)-furanone; cyclic α-keto enamines, cyclotene derivatives such as cyclopentenes including 3-methyl-2-(1-pyrrolidinyl)-2-cyclopenten-1-one and 5-methyl-2-(1-pyrrolidinyl)-2-cyclopenten-1-one, compounds of the formula: 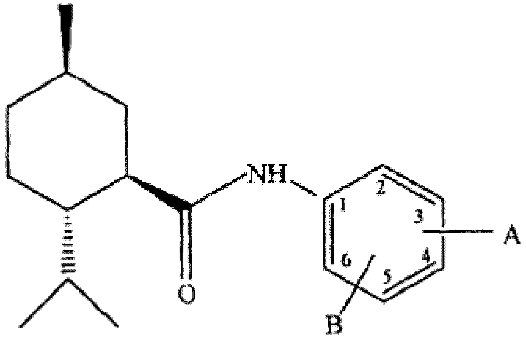 wherein B is selected from H, CH3, C2H5, OCH3, OC2H5; and OH; and wherein A is a moiety of the formula-CO-D, wherein D is selected from the following moieties: (i)-NR1R2, wherein R' and R2 are independently selected from H and C1-C8 straight or branched-chain aliphatic, alkoxyalkyl, hydroxyalkyl, araliphatic and cycloalkyl groups, or R1 and R2 together with the nitrogen atom to which they are attached form part of an optionally-substituted, five-or six-membered heterocyclic ring; (ii)-NIICH2COOCH2CH3,-NHCH2CONH2,-NHCH2CH2OCH3,-NHCH2CH2OH,-NHCH2CH(OH)CH2OH and (iii) a moiety selected from the group consisting of: 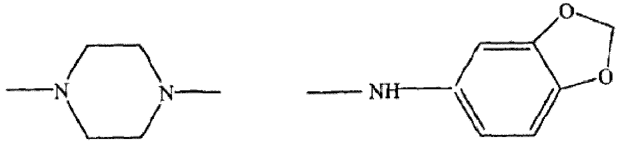 as disclosed in International Patent Publication No. WO2006/125334 to Bell et al. Other compounds include the alpha-keto enamines disclosed in U.S. Patent Number 6,592,884 to Hofmann et al. These and other suitable cooling agents are further described in the following U.S. patents: U.S. 4,230,688; 4,032,661; 4,459,425; 4,178,459; 4,296,255; 4,136,163; 5,009,893; 5,266,592; 5,698,181; 6,277,385; 6,627,233; 7,030,273. Still other suitable cooling agents are further described in the following U.S. Patent Publications: U.S. 2005/0222256; 2005/0265930.

Some embodiments may include warming agents, which may be selected from a wide variety of compounds known to provide the sensory signal of warming to the individual user. These compounds offer the perceived sensation of warmth, particularly in the oral cavity, and often enhance the perception of flavors, sweeteners and other organoleptic components. Useful warming agents include those having at least one allyl vinyl component, which may bind to oral receptors. Examples of suitable warming agents include, but are not limited to: vanillyl alcohol n-butylether (TK-1000, supplied by Takasago Perfumery Company Ltd., Tokyo, Japan); vanillyl alcohol n-propylether; vanillyl alcohol isopropylether; vanillyl alcohol isobutylether; vanillyl alcohol n-aminoether; vanillyl alcohol isoamylether; vanillyl alcohol n-hexylether; vanillyl alcohol methylether; vanillyl alcohol ethylether; gingerol; shogaol; paradol; zingerone; capsaicin; dihydrocapsaicin; nordihydrocapsaicin; homocapsaicin; homodihydrocapsaicin; ethanol; isopropyl alcohol; iso-amylalcohol; benzyl alcohol; glycerin; chloroform; eugenol; cinnamon oil; cinnamic aldehyde; phosphate derivatives thereof; and combinations thereof.

In some embodiments, tingling agents may be employed to provide a tingling, stinging or numbing sensation to the user. Tingling agents include, but are not limited to: Jambu Oleoresin or para cress (Spilanthes sp.), in which the active ingredient is Spilanthol; Japanese pepper extract (Zanthoxylum peperitum), including the ingredients known as Saanshool-I, Saanshool-II and Sanshoamide; perillartine; 4-(1-menthoxymethyl)-2-phenyl-1,3-dioxolane; black pepper extract (piper nigrum), including the active ingredients chavicine and piperine; Echinacea extract; Northern Prickly Ash extract; trans-pellitorin, and red pepper oleoresin. In some embodiments, alkylamides extracted from materials such as jambu or sanshool may be included. Additionally, in some embodiments, a sensation is created due to effervescence. Such effervescence is created by combining an alkaline material with an acidic material, either or both of which may be encapsulated. In some embodiments, an alkaline material may include alkali metal carbonates, alkali metal bicarbonates, alkaline earth metal carbonates, alkaline earth metal bicarbonates and mixtures thereof. In some embodiments, an acidic material may include acetic acid, adipic acid, ascorbic acid, butyric acid, citric acid, formic acid, fumaric acid, glyconic acid, lactic acid, phosphoric acid, malic acid, oxalic acid, succinic acid, tartaric acid and combinations thereof. Examples of "tingling" type sensates include those disclosed in U.S. Patent Nos. 6,780,443, 6,159,509, 5,545,424, and 5,407,665.

Sensate components may also be referred to as "trigeminal stimulants" such as those disclosed in U.S. Patent Publication No. 2005/0202118. Trigeminal stimulants are defined as an orally consumed product or agent that stimulates the trigeminal nerve. Examples of cooling agents which are trigeminal stimulants include menthol, WS-3, N-substituted p-menthane carboxamide, acyclic carboxamides including WS-23, WS-5, WS-14, methyl succinate, and menthone glycerol ketals. Trigeminal stimulants can also include flavors, tingling agents, Jambu extract, vanillyl alkyl ethers, such as vanillyl n-butyl ether, spilanthol, Echinacea extract, Northern Prickly Ash extract, capsaicin, capsicum oleoresin, red pepper oleoresin, black pepper oleoresin, piperine, ginger oleoresin, gingerol, shoagol, cinnamon oleoresin, cassia oleoresin, cinnamic aldehyde, eugenol, cyclic acetal of vanillin and menthol glycerin ether, unsaturated amides, and combinations thereof. Other cooling compounds can include derivatives of 2,3-dimethyl-2- isopropylbutyric acid such as those disclosed in U.S. 7,030,273.

In addition to trigeminal nerve stimulants and cooling compounds, a cooling sensation can be provided by materials exhibiting a negative heat of solution including, but not limited to, polyols such as xylitol, erythritol, dextrose, and sorbitol, and combinations thereof.

In some embodiments, sensate components are used at levels that provide a perceptible sensory experience i.e. at or above their threshold levels. In other embodiments, sensate components are used at levels below their threshold levels such that they do not provide an independent perceptible sensory experience. At subthreshold levels, the sensates may provide an ancillary benefit such as flavor or sweetness enhancement or potentiation.

### Active Agents - Food Acids

Acids can include, but are not limited to acetic acid, adipic acid, ascorbic acid, butyric acid, citric acid, formic acid, fumaric acid, glyconic acid, lactic acid, phosphoric acid, malic acid, oxalic acid, succinic acid, tartaric acid, aspartic acid, benzoic acid, caffeotannic acid, iso-citric acid, citramalic acid, galacturonic acid, glucuronic acid, glyceric acid, glycolic acid, ketoglutaric acid, a-ketoglutaric acid, lactoisocitric acid, oxalacetic acid, pyruvic acid, quinic acid, shikimic acid, succinic acid, tannic acid, hydroxyacetic acid, suberic acid, sebacic acid, azelaic acid, pimelic acid, capric acid, and combinations thereof.

### Active Agents - Potentiators

Potentiators can consist of materials that may intensify, supplement, modify or enhance the taste and/or aroma perception of an original material without introducing a characteristic taste and/or aroma perception of their own. In some embodiments, potentiators designed to intensify, supplement, modify, or enhance the perception of flavor, sweetness, tartness, umami, kokumi, saltiness and combinations thereof can be included.

In some embodiments, examples of suitable potentiators, also known as taste potentiators include, but are not limited to, neohesperidin dihydrochalcone, optically active S-alkyl 2-methyl butane thioate compounds such as those disclosed in International Publication Number WO 2007/032262 to Ogura et al., chlorogenic acid, alapyridaine, cynarin, miraculin, glupyridaine, pyridinium-betain compounds, glutamates, such as monosodium glutamate and monopotassium glutamate, neotame, thaumatin, tagatose, trehalose, salts, such as sodium chloride, monoammonium glycyrrhizinate, vanilla extract (in ethyl alcohol), sugar acids, potassium chloride, sodium acid sulfate, hydrolyzed vegetable proteins, hydrolyzed animal proteins, yeast extracts, adenosine monophosphate (AMP), glutathione, nucleotides, such as inosine monophosphate, disodium inosinate, xanthosine monophosphate, guanylate monophosphate, alapyridaine (N-(1-carboxyethyl)-6-(hydroxymethyl)pyridinium-3-ol inner salt, compositions comprising 5'-nucleotides such as those disclosed in US 2006/0078972 to Noordam et al., sugar beet extract (alcoholic extract), sugarcane leaf essence (alcoholic extract), curculin, strogin, mabinlin, gymnemic acid, hydroxybenzoic acids, 3-hydrobenzoic acid, 2,4-dihydrobenzoic acid, citrus aurantium, vanilla oleoresin, sugarcane leaf essence, maltol, ethyl maltol, vanillin, licorice glycyrrhizinates, compounds that respond to the TRPM5 ion channel that mediates taste receptors for sweet, bitter, and savory tastes as disclosed in U.S. Patent Publication Number 2005/0019830 to Penner et al., pyridinium betain compounds as disclosed in U.S. Patent No. 7,175,872 to Hofmann et al., compounds that respond to G-protein coupled receptors (T2Rs and T1Rs) and taste potentiator compositions that impart kokumi, as disclosed in U.S. Patent No. 5,679,397 to Kuroda et al. "Kokumi" refers to materials that impart "mouthfulness" and "good body".

Sweetener potentiators, which are a type of taste potentiator, enhance the taste of sweetness. In some embodiments, exemplary sweetener potentiators include, but are not limited to, monoammonium glycyrrhizinate, licorice glycyrrhizinates, citrus aurantium, alapyridaine, alapyridaine (N-(1-carboxyethyl)-6-(hydroxymethyl)pyridinium-3-ol) inner salt, miraculin, curculin, strogin, mabinlin, gymnemic acid, cynarin, glupyridaine, pyridinium-betain compounds, sugar beet extract, neotame, thaumatin, neohesperidin dihydrochalcone, hydroxybenzoic acids, tagatose, trehalose, gurmarin, extracts and derivatives of extracts from *Gymnema sylvestre,* tryptophan, maltol, ethyl maltol, vanilla extract, vanilla oleoresin, vanillin, sugar beet extract (alcoholic extract), sugarcane leaf essence (alcoholic extract), compounds that respond to G-protein coupled receptors (T2Rs and TIRs), compounds that respond to the human T1R2 taste receptor, and combinations thereof.

### Active Agents - Mouth Moisteners

Mouth moisteners can include, but are not limited to, saliva stimulators such as acids and salts and combinations thereof. In some embodiments, acids can include acetic acid, adipic acid, ascorbic acid, butyric acid, citric acid, formic acid, fumaric acid, glyconic acid, lactic acid, phosphoric acid, malic acid, oxalic acid, succinic acid, tartaric acid and combinations thereof.

Mouth moisteners can also include hydrocolloid materials that hydrate and may adhere to oral surface to provide a sensation of mouth moistening. Hydrocolloid materials can include naturally occurring materials such as plant exudates, seed gums, and seaweed extracts or they can be chemically modified materials such as cellulose, starch, or natural gum derivatives. In some embodiments, hydrocolloid materials can include pectin, gum arabic, acacia gum, alginates, agar, carrageenans, guar gum, xanthan gum, locust bean gum, gelatin, gellan gum, cassia gum, galactomannans, tragacanth gum, karaya gum, curdlan, konjac, chitosan, xyloglucan, beta glucan, furcellaran, gum ghatti, tamarin, bacterial gums, and combinations thereof. Additionally, in some embodiments, modified natural gums such as propylene glycol alginate, carboxymethyl locust bean gum, low methoxyl pectin, and their combinations can be included. In some embodiments, modified celluloses can be included such as microcrystalline cellulose, carboxymethylcellulose (CMC), methylcellulose (MC), hydroxypropylmethylcellulose (HPCM), and hydroxypropylcellulose (MPC), and combinations thereof.

Similarly, humectants that can provide a perception of mouth hydration may be included. Such humectants can include, but are not limited to glycerol, sorbitol, polyethylene glycol, erythritol, and xylitol. Additionally, in some embodiments, fats can provide a perception of mouth moistening. Such fats can include medium chain triglycerides, vegetable oils, fish oils, mineral oils, and combinations thereof.

Mouth moisteners can also include pellitorine extracts, extracts of *Anacyclus pyrethrum,* trans-pellitorin, N-isobutyl-trans-2-trans-4-decadienamide, alkadienamides including N-isobutyl-E2, E4-decadienamide; N-isobutyl-E2, E4-undecadienamide; N-pyrollidyl-E2, E4-decadienamide; N-piperidl-E2, E4-decadienamdie, or combinations thereof as disclosed in U.S. Patent Publication No. 2007/0075368; blends of n-isobutyldeca-trans-2-trans-4-dienamide with food acids as disclosed in U.S. Patent Publication No. 2006/0204551; blends of compounds according to formula (I): wherein R₁ represents C1-C2 n-alkyl; R₂ is 2-methyl-1-propyl and R₃ is hydrogen, or R₂ and R₃ taken together is a moiety having the formula--(CH₂)ₙ--wherein n is 4 or 5, or mixtures thereof with cooling compounds as disclosed in U.S. Patent Publication No. 2007/0036838 to Keenan et al.

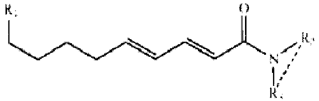

### Active Agents - Medicaments

Medicaments generally refer to those ingredients that are included in a delivery system and/or confectionery composition for the desired end benefit they provide to the user. In some embodiments, medicaments can include nutrients, nutraceuticals, herbals, nutritional supplements, pharmaceuticals, drugs, and the like and combinations thereof. Active agents can provide benefits including, but not limited to, throat soothing, mouth moistening, breath freshening, oral care, well being, bone health, gut health, immunity, alertness, cardiac health, weight management, and appetite suppression.

### Multi-region Chewy Confection

More specifically, some embodiments are directed to multi-region chewy confectionery compositions. In multi-region chewy confectionery composition embodiments, the confection may include a filling composition and a shell composition. The multi-region chewy confectionery composition also includes a coating surrounding at least a portion of the second region or shell composition. Suitable coatings and shell compositions may include any of those as described above.

The filling composition of the multi-region chewy confectionery composition may include a particulate material. In some embodiments, the particulate material is a blend of dextrose and erythritol and the blend can have a maximum average particle size of less than 600 microns. In some embodiments, the shell composition can include a fat and the fat can be present in an amount of from about 3% w/w to about 15% w/w by weight of said shell composition. In some embodiments, the shell composition has a desirable chewiness perception. In some embodiments, the shell composition has a chewiness of 3 to 7 on a scale of 1 to 10 as measured by quantitative descriptive analysis.

In some embodiments, the filling composition of the multi-region chewy confectionery composition may include an aqueous or non-aqueous carrier. The carrier can be present in an amount of from about 1% w/w to about 80% w/w by weight of the filling composition.

In some embodiments, the carrier may be selected from fats, glycerin, hydrogenated starch hydrolysates, and combinations thereof.

In some embodiments, the carrier is a fat with a complete melting point below 37°C and a melting point range expressed as a temperature differential of no more than 5°C. In some embodiments, the carrier fat is present in an amount of from about 1% w/w to about 80% w/w by weight of said filling composition. In other embodiments, the carrier fat is present in an amount of from about 20% w/w to about 80% w/w by weight of said filling composition.

In some embodiments, the filling composition includes glycerin. Glycerin may be present in amounts of about 1.0% to about 30.0% by weight of the filling composition, specifically about 1.5% to about 20.0% by weight of the filling composition. Suitable hydrogenated starch hydrolysates include any of those as described above and may be present in amounts of about 20% to about 50% by weight of the filling composition, specifically about 35% to about 45% by weight of the filling composition. Glycerin and hydrogenated starch hydrolysate may be used alone or in combination to tailor the viscosity. Hydrogenated starch hydrolysates may provide a filling composition that is highly viscous, whereas glycerin provides lower viscosity filling compositions. A combination of glycerin and hydrogenated starch hydrolysate may provide a range of high, low and intermediate viscosity ranges.

The filling composition also may include a particulate material suspended in the carrier. Suitable saccharide particles may include erythritol particles, xylitol particles, dextrose particles, and combinations thereof. Suitable erythritol particles may include any of those as described above and may be present in amounts of about 10% to about 80% by weight of the filling composition, more desirably an amount of about 20% to about 60% by weight of the filling composition. Dextrose particles may be present in amounts of about 10% to about 80% by weight of the filling composition, more desirably an amount of about 20% to about 60% by weight of the filling composition.

As discussed above, the particulate material may be in a slurry with the carrier. The slurry also may include at least one flavor agent and at least one cooling agent. Examples of suitable particulate material may include any of the erythritol and/or dextrose particles as described above. Examples of suitable carriers may include any of the fats, glycerin and/or hydrogenated starch hydrolysates as described above. Examples of suitable flavor agents and cooling agents also may include any of those as described above.

In some embodiments, the solids content of the slurry may be higher than conventional filling compositions. For instance, the filling composition may have a solids content of about 95%, whereas solids levels typically are about 80-82%. Even though such embodiments can provide less liquid sensation, they still impart a cooling effect due to the erythritol and/or dextrose particles suspended therein.

Some embodiments extend to methods of making multi-region chewy confectionery compositions. The compositions may be prepared using standard techniques and equipment known to those skilled in the art, as discussed above. In some embodiments, a filled rope is formed by introducing a filling composition into the shell composition by means of an extruder or any other suitable apparatus. The filled rope can then be sized and individual multi-region confectionery pieces can be formed by any known means such as by chain die cutting, rotary cutting, or the like. The multi-region confectionery pieces can then optionally be coated by any known means and/or method. Coating means and methods can include, but are not limited to pan coating, sanding, dusting, and the like. Coating methods can be conducted on by continuous processes, batch processes, or by a combination of batch and continuous processes.

In some embodiments, the various regions of the multi-region chewy confection have water activity and/or moisture level differences. These differences can result in moisture migration between the regions. In some embodiments, the regions are manipulated to minimize the water activity and/or moisture level differences. In some embodiments, the water activity difference is within 50% as measured by equilibrium relative humidity. In some embodiments, the moisture level difference is within 50% as measured by with weight percent of water based on the total weight of the region.

In some embodiments, the relative proportions of the various regions of the multi-region chewy confection are manipulated to provide a desired product. In some embodiments the first region is present in amounts of from about 5% w/w to about 50% w/w by weight of the multi-region chewy confection. In other embodiments, the first region is present in amounts of from about 10% w/w to about 30% w/w by weight of the multi-region chewy confection.

In some embodiments, the second region is present in amounts of from about 25% w/w to about 85% w/w by weight of the multi-region chewy confection. In other embodiments, the second region is present in amounts of from about 35% w/w to about 70% w/w by weight of the multi-region chewy confection.

In some embodiments, the third region is present in amounts of from about 2% w/w to about 50% w/w by weight of the multi-region chewy confection. In other embodiments, the third region is present in amounts of from about 3% to about 35% w/w by weight of the multi-region chewy confection.

In some embodiments, active agents such as, but not limited to, warming agents, cooling agents, tingling agents, flavors, sweeteners, sour tastes, bitter tastes, salty tastes, surfactants, breath freshening agents, anti-microbial agents, anti-bacterial agents, anti-calculus agents, antiplaque agents, fluoride compounds, remineralization agents, pharmaceuticals, micronutrients, throat care actives, tooth whitening agents, energy boosting agents, concentration boosting agents, appetite suppressants, colors, medicaments, and other actives may be included in any or all portions or regions of the multi-region chewy confection. Such components may be used in amounts sufficient to achieve their intended effects.

In some embodiments, the first region and second region both contain active agents and the active agent in the first region is different from the active agent in the second region. An active agent can be said to be different when either its chemical composition is not the same, or when it provides a different perception, or when it provides a different benefit. For example, the first region may include menthyl glutarate while the second region may include menthol. Both actives are cooling agents but they have different chemical compositions. As another example, the first region may include a warming agent while the second region a cooling agent. The warming agent would be perceived as warming, which is different from the cooling perception provided by the cooling agent. As yet another example, the first region may contain a stimulant such as caffeine while the second region may contain an analgesic such as acetaminophen.

In some embodiments, the active agent in the first region is complementary to the active agent in the second region. An active agent can be said to be complementary when it enhances the effect or perception of another active agent. For example, the first region may contain citric acid to provide upfront tartness while the second region contains malic acid for a long lasting tartness.

In some embodiments, the active agent in the first region contrasts with the active agent in the second region. An active agent can be said to contrast with another active agent if the active agents if they provide opposing perceptions or benefits. For example, the first region may contain a citric acid to provide tartness while the second region contains a high intensity sweetener to provide sweetness. In other examples, the first region may contain a stimulant such as caffeine while the second region may contain a stress relieving agent such as theanine.

In some embodiments, the compositions of the various regions of the multi-region chewy confection are manipulated to provide a perception of refreshment. Refreshment can be measured by consumer testing where consumers are asked to rate the level of refreshment provided by a sample on a line scale such as a scale of from 1 to 10. Alternatively, refreshment can be measured using quantitative descriptive analysis by measuring the level of chemical cooling. In some embodiments, the multi-region confectionery composition has a chemical cooling rating of at least 7 on a scale of 1 to 10 as measured by quantitative descriptive analysis. As used herein, the term "chemical cooling" refers to a quantitative descriptive analysis metric that measures the cooling sensation experienced in the mouth when the panelist pulls in air flow.

In some embodiments, the first region may contain a particulate material such as erythritol, which provides a cooling sensation. In some embodiments, a perception of refreshment and/or chemical cooling is provided by including cooling compounds in the second and/or third regions. In some embodiments, a sensation of refreshment and/or chemical cooling is provided by formulating the first region to dissolve or to disperse in the mouth faster than the second region.

### EXAMPLES

The features and advantages of some embodiments of the present invention are more fully shown by the following examples, which are provided for purposes of illustration, and are not to be construed as limiting the invention in any way.

### Examples A-N - Non-aqueous Carrier in Filling

The following Examples A-O as set forth in Tables 1, 2 and 3 are directed to the inventive multi-region chewy confectionery compositions of some embodiments. The filling regions of the compositions include one or more particulate materials suspended in a carrier, which includes a fat.

**Table 1. Filling compositions with Fat Carriers**

| **Ingredient** | **%w/w of Filling Composition** | | | |
|---|---|---|---|---|
| | A | B | C | D |
| Dextrose powder | 20-80 | | 10-40 | |
| Erythritol powder | | 20-80 | 10-40 | 10-40 |
| Xylitol powder | | | | 10-40 |
| Hydrogenated vegetable fat | 20-80 | 20-80 | 20-80 | |
| Cocoa fat | | | | 20-80 |
| Emulsifier | 0-5 | 0-5 | 0-5 | 0-5 |
| Food acid | 0-5 | 0-5 | 0-5 | 0-5 |
| Flavor | 0-5 | 0-5 | 0-5 | 0-5 |
| Menthol | 0-5 | 0-5 | 0-5 | 0-5 |
| Color | 0-0.5 | 0-0.5 | 0-0.5 | 0-0.5 |

**Table 2. Confectionery Shell compositions**

| **Ingredient** | **%w/w of Confectionery Shell Composition** | | | | | | |
|---|---|---|---|---|---|---|---|
| | E | F | G | H | I | J | K |
| 62 DE Corn Syrup | 35-60 | | 17-30 | 0-20 | | | |
| 43 DE Corn Syrup | | 35-60 | 17-30 | 35-60 | | | |
| Maltitol | | | | | | 10-90 | |
| Isomalt | | | | | 10-90 | | |
| Sorbitol | | | | | | | 10-90 |
| Hydrogenated Starch Hydrolysates | | | | | 0-30 | 0-30 | 0-30 |
| Water | 0-25 | 0-25 | 0-25 | 0-25 | 0-25 | 0-25 | 0-25 |
| Hydrogenated vegetable fat | 1-10 | 1-10 | 1-10 | 1-10 | 1-10 | 1-10 | 1-10 |
| Emulsifier | 0-1 | 0-1 | 0-1 | 0-1 | 0-1 | 0-1 | 0-1 |
| Sucrose | 25-65 | 25-65 | 25-65 | 25-65 | | | |
| Fondant (6X or 10X sugar) | 0-10 | 0-10 | 0-10 | 0-10 | | | |
| Gelatin | 1-10 | 1-10 | 1-10 | | 1-10 | 1-10 | 1-10 |
| Acesulfame K | | | | | 0.001-1.5 | 0.001-1.5 | 0.001-1.5 |
| Sucralose | | | | | 0.001-1.5 | 0.001-1.5 | 0.001-1.5 |
| Aspartame | | | | | 0.001-1.5 | 0.001-1.5 | 0.001-1.5 |
| Cooling Compounds | 0.01-0.5 | 0.01-0.5 | 0.01-0.5 | 0.01-0.5 | 0.01-0.5 | 0.01-0.5 | 0.01-0.5 |
| Food acid | 0-5 | 0-5 | 0-5 | 0-5 | 0-5 | 0-5 | 0-5 |
| Flavor | 0-5 | 0-5 | 0-5 | 0-5 | 0-5 | 0-5 | 0-5 |
| Menthol | 0-5 | 0-5 | 0-5 | 0-5 | 0-5 | 0-5 | 0-5 |
| Color | 0-0.5 | 0-0.5 | 0-0.5 | 0-0.5 | 0-0.5 | 0-0.5 | 0-0.5 |

**Table 3. Confectionery Coating compositions**

| **Ingredient** | **%w/w of Confectionery Coating Composition** | | | |
|---|---|---|---|---|
| | L | M | N | O |
| Sugar | 90-99.9 | | | |
| Dextrose | | 90-99.9 | | |
| Maltitol | | | | 90-99.9 |
| Isomalt | | | 90-99.9 | |
| Gum Arabic | 0-5 | 0-5 | 0-5 | 0-5 |
| Starch | 0-5 | 0-5 | 0-5 | 0-5 |
| Cooling Compounds | 0.01-0.5 | 0.01-0.5 | 0.01-0.5 | 0.01-0.5 |
| Flavor | 0-5 | 0-5 | 0-5 | 0-5 |
| Menthol | 0-5 | 0-5 | 0-5 | 0-5 |
| Color | 0-0.5 | 0-0.5 | 0-0.5 | 0-0.5 |

Multi-region chewy confectionery compositions including a filling region, a shell region, and a coating region are prepared according to the compositions in Tables 1, 2, and 3 above with each region according to the corresponding components for compositions A-O.

To prepare the filling compositions, the powdered ingredients are combined in a mixing vessel and mixed until homogeneous. Next, the fat and emulsifier are melted together. The cooling compounds and menthol are solubilized in the flavor and added along with the acid to the melted fat/emulsifier blend. Once the fat mixture is homogeneously mixed, the powders are mixed in until homogeneously dispersed.

To prepare the shell region, the sucrose with com syrups and water or polyol (maltitol) and water are mixed to create a homogeneous mixture and the mixture is cooked to about 130C. Separately, the gelatin is hydrated by mixing with a small amount of water. When the cooked mixture reaches about 90C, the hydrated gelatin is added along with fat, emulsifier, color, high intensity sweetener(s) and acid and mixed thoroughly. The mixture is then placed on a cooling table where flavor (including menthol and cooling compounds solubilized in the flavor) and acid are added. The mixture is then pulled to a desired consistency before being fed into a process for forming a multi-region chewy confectionery product.

The shell and filling compositions arc then extruded together and formed into any desired shape configuration. An optional coating composition as shown in Table 3 may be applied as described above in the section describing the coating region. The confectionery pieces can each have a total weight of approximately 2 g. to 10g. In the final confectionery pieces, the confectionery region is about 40-65% by weight, the filling is about 5-45% by weight, and the coating is about 0-50% by weight.

### Examples E-S - Powder Filling

The following Examples E-S as set forth in Tables 2, 3 and 4 are directed to the inventive multi-region chewy confectionery compositions of some embodiments. The filling regions of the compositions include one or more particulate materials.

**Table 4. Filling compositions with Particulate Materials**

| **Ingredient** | **%w/w of Filling Composition** | | | |
|---|---|---|---|---|
| | P | Q | R | S |
| Dextrose powder | 90-100 | | 45-50 | |
| Erythritol powder | | 90-100 | 45-50 | 45-50 |
| Xylitol powder | | | | 45-50 |
| Food acid | 0-5 | 0-5 | 0-5 | 0-5 |
| Flavor | 0-5 | 0-5 | 0-5 | 0-5 |
| Menthol | 0-5 | 0-5 | 0-5 | 0-5 |
| Color | 0-0.5 | 0-0.5 | 0-0.5 | 0-0.5 |
| Bulk density | 0.5-0.6 | 0.2-0.3 | 0.3-0.4 | 0.3-0.4 |
| Tap density | 0.6-0.7 | 0.5-0.6 | 0.6-0.7 | 0.6-0.7 |

Multi-region chewy confectionery compositions including a filling region, a shell region, and a coating region are prepared according to the compositions in Tables 2, 3, and 4 above with each region according to the corresponding components for compositions E-S.

To prepare the filling compositions, the powdered ingredients are combined in a mixing vessel and mixed until homogeneous.

To prepare the shell region, the sucrose with com syrups and water or polyol (maltitol) and water are mixed to create a homogeneous mixture and the mixture is cooked to about 130C. Separately, the gelatin is hydrated by mixing with a small amount of water. When the cooked mixture reaches about 90C, the hydrated gelatin is added along with fat, emulsifier, color, high intensity sweetener(s) and acid and mixed thoroughly. The mixture is then placed on a cooling table where flavor (including menthol and cooling compounds solubilized in the flavor) and acid are added. The mixture is then pulled to a desired consistency before being fed into a process for forming a multi-region chewy confectionery product.

The shell and filling compositions are then extruded together and formed into any desired shape configuration. An optional coating composition as shown in Table 3 may be applied as described above at paragraphs in the section describing the coating region. The confectionery pieces can each have a total weight of approximately 2 g. to 10g. In the final confectionery pieces, the confectionery region is about 40-65% by weight, the filling is about 5-45% by weight, and the coating is about 0-50% by weight.

### Examples E-O and T-W - Aqueous Carrier in Filling

The following Examples E-O and T-W as set forth in Tables 2, 3 and 5 are directed to the inventive multi-region chewy confectionery compositions of some embodiments. The filling regions of the compositions include one or more particulate materials with an aqueous carrier.

**Table 5. Filling compositions with Aqueous Carriers**

| **Ingredient** | **%w/w of Filling Composition** | | | |
|---|---|---|---|---|
| | T | U | V | W |
| Dextrose powder | 15-35 | | 15-35 | |
| Erythritol powder | 15-35 | 35-65 | 15-35 | 15-35 |
| Xylitol powder | | | | 15-35 |
| Hydrogenated Starch Hydrolysate | | | 15-75 | 15-75 |
| Glycerin | 0-20 | 0-20 | 0-20 | 0-20 |
| High Fructose Corn Syrup | 5-15 | 5-15 | | |
| High Maltose Corn Syrup | 0-10 | 0-10 | | |
| Invert Sugar | 10-30 | 10-30 | | |
| Carboxymethyl Cellulose | 0-0.2 | 0-0.2 | | |
| Emulsifier | 0-5 | 0-5 | 0-5 | 0-5 |
| Food acid | 0-5 | 0-5 | 0-5 | 0-5 |
| Flavor | 0-5 | 0-5 | 0-5 | 0-5 |
| Menthol | 0-5 | 0-5 | 0-5 | 0-5 |
| Color | 0-0.5 | 0-0.5 | 0-0.5 | 0-0.5 |

Multi-region chewy confectionery compositions including a filling region, a shell region, and a coating region are prepared according to the compositions in Tables 2, 3, and 5 above with each region according to the corresponding components for compositions E-O and T-W.

To prepare the filling compositions, the hydrogenated starch hydrolysates and/or corn syrup(s) are mixed together with any glycerin until homogeneous. Then the powdered ingredients, flavor, acid, color, and emulsifiers are combined into the liquid blend and mixed until homogeneous.

To prepare the shell region, the sucrose with com syrups and water or polyol (maltitol) and water are mixed to create a homogeneous mixture and the mixture is cooked to about 130C. Separately, the gelatin is hydrated by mixing with a small amount of water. When the cooked mixture reaches about 90C, the hydrated gelatin is added along with fat, emulsifier, color, high intensity sweetener(s) and acid and mixed thoroughly. The mixture is then placed on a cooling table where flavor (including menthol and cooling compounds solubilized in the flavor) and acid are added. The mixture is then pulled to a desired consistency before being fed into a process for forming a multi-region chewy confectionery product.

The shell and filling compositions are then extruded together and formed into any desired shape configuration. An optional coating composition as shown in Table 3 may be applied as described above in the section describing the coating region. The confectionery pieces can each have a total weight of approximately 2 g. to 10g. In the final confectionery pieces, the confectionery region is about 40-65% by weight, the filling is about 5-45% by weight, and the coating is about 0-50% by weight.

## Claims

1. A confectionery composition comprising:
a. a first region, said first region comprising a particulate material wherein said particulate material has a negative heat of solution and wherein said particulate material has a tap density of from about 0.4gm./ml. to about 0.8 gm./ml.;
b. a second region, said second region comprising a soluble chewable matrix having a moisture content of from about 5% w/w to about 15% w/w by weight of said chewable matrix, wherein said second region at least partially surrounds said first region; and
c. a third region at least partially surrounding said second region, said third region comprising a coating.

2. The confectionery composition as in claim 1, wherein said first region comprises a blend of particulate materials, wherein said blend of particulate materials comprises a first particulate material and a second particulate material, wherein said first particulate material is selected from the group consisting of dextrose, sorbitol and combinations thereof and said second particulate material is selected from the group consisting of mannitol, maltitol, lactitol, isomalt, xylitol, erythritol, sucrose, maltose and combinations thereof, wherein said blend is less hygroscopic than sorbitol.

3. The confectionery composition as in claim 2, wherein said blend has a maximum particle size of less than about 600 microns

4. The confectionery composition as in claim 2, wherein said first region further comprises a carrier.

5. The confectionery composition as in claim 1, wherein said second region comprises one or more cavities each having a volume and wherein said first region is located inside said one or more cavities such that said first region fills at least 90% of said volume of said one or more cavities.

6. A method of producing a confection comprising the steps of
a. producing a filled rope comprising:
i. a first region, said first region comprising a particulate material and a carrier, wherein said particulate material has a negative heat of solution and wherein said particulate material has a tap density of from about 0.4 gm./ml. to about 0.8 gm./ml.; and
ii. a second region, said second region comprising a soluble chewable matrix having a moisture content of from about 5% w/w to about 15% w/w by weight of said chewable matrix, wherein said second region has a moisture content of from about 5% w/w to about 15% w/w by weight of said second region and wherein said second region at least partially surrounds said first region;
b. sizing said filled rope;
c. forming said sized filled rope into individual pieces; and
d. applying a third region to said individual pieces, wherein said third region at least partially surrounds said second region and said third region comprises a coating.

7. A method of providing a refreshing sensation to a user comprising the steps of
a. producing a confectionery product according to claim 6; and
b. formulating said first region to have a higher intensity of chemical cooling than said second region.

8. The method as in claim 6, further comprising the step of formulating said third region to have a negative heat of solution.

9. The method as in claim 6, further comprising the step of formulating said third region to include at least one cooling agent.

## Patentansprüche

1. Süßwarenzusammensetzung, die umfasst:
a. einen ersten Bereich, wobei der erste Bereich ein Partikelmaterial umfasst, wobei das Partikelmaterial eine negative Lösungswärme aufweist und wobei das Partikelmaterial eine Klopfdichte von etwa 0,4 g/ml bis 0,8 g/ml aufweist;
b. einen zweiten Bereich, wobei der zweite Bereich eine lösliche kaubare Matrix mit einem Feuchtigkeitsgehalt von etwa 5 Gew.-% (w/w) bis etwa 15 Gew.-% (w/w) der kaubaren Matrix umfasst, wobei der zweite Bereich den ersten Bereich wenigstens teilweise umgibt; und
c. einen dritten Bereich, der den zweiten Bereich wenigstens teilweise umgibt, wobei der dritte Bereich eine Überzugsmasse umfasst.

2. Süßwarenzusammensetzung nach Anspruch 1, wobei der erste Bereich eine Mischung von Partikelmaterialien umfasst, wobei die Mischung von Partikelmaterialien ein erstes Partikelmaterial und ein zweites Partikelmaterial umfasst, wobei das erste Partikelmaterial aus der Gruppe ausgewählt wird, die aus Traubenzucker, Sorbit und Zusammensetzungen daraus besteht, und wobei das zweite Partikelmaterial aus der Gruppe ausgewählt wird, die aus Mannit, Maltit, Lactit, Isomalt, Xylit, Erythrit, Saccharose, Maltose und Zusammensetzungen daraus besteht, wobei die Mischung weniger hygroskopisch als Sorbit ist.

3. Süßwarenzusammensetzung nach Anspruch 2, wobei die Mischung eine maximale Partikelgröße von weniger als etwa 600 Mikrometer aufweist.

4. Süßwarenzusammensetzung nach Anspruch 2, wobei der erste Bereich ferner einen Träger umfasst.

5. Süßwarenzusammensetzung nach Anspruch 1, wobei der zweite Bereich einen oder mehrere Hohlräume umfasst, wobei jeder ein Volumen aufweist und wobei sich der erste Bereich innerhalb des einen oder der mehreren Hohlräume befindet, sodass der erste Bereich wenigstens 90 % des Volumens des einen oder der mehreren Hohlräume füllt.

6. Verfahren zum Herstellen einer Süßware, wobei das Verfahren die folgenden Schritte umfasst:
a. Herstellen eines gefüllten Strangs, der umfasst:
i. einen ersten Bereich, wobei der erste Bereich ein Partikelmaterial und einen Träger umfasst, wobei das Partikelmaterial eine negative Lösungswärme aufweist und wobei das Partikelmaterial eine Klopfdichte von etwa 0,4 g/ml bis etwa 0,8 g/ml aufweist; und
ii. einen zweiten Bereich, wobei der zweite Bereich eine lösliche kaubare Matrix umfasst, die einen Feuchtigkeitsgehalt von etwa 5 Gew.-% (w/w) bis etwa 15 Gew.-% (w/w) der kaubaren Matrix aufweist, wobei der zweite Bereich einen Feuchtigkeitsgehalt von etwa 5 Gew.-% (w/w) bis etwa 15 Gew.-% (w/w) des zweiten Bereichs aufweist und wobei der zweite Bereich den ersten Bereich wenigstens teilweise umgibt;
b. Bemessen des gefüllten Strangs;
c. Formen des bemessenen gefüllten Strangs in Einzelteile; und
d. Auftragen eines dritten Bereichs auf die Einzelteile, wobei der dritte Bereich den zweiten Bereich wenigstens teilweise umgibt und wobei der dritte Bereich eine Überzugsmasse umfasst.

7. Verfahren zum Bereitstellen einer Erfrischungsempfindung für einen Nutzer, wobei das Verfahren die folgenden Schritte umfasst:
a. Herstellen eines Süßwarenprodukts nach Anspruch 6; und
b. Formulieren des ersten Bereichs in der Weise, dass er eine höhere Stärke der chemischen Abkühlung als der zweite Bereich aufweist.

8. Verfahren nach Anspruch 6, das ferner einen Schritt des Formulierens des dritten Bereichs in der Weise, dass er eine negative Lösungswärme aufweist, umfasst.

9. Verfahren nach Anspruch 6, das ferner einen Schritt des Formulierens des dritten Bereichs in der Weise, dass er wenigstens ein Kühlmittel enthält, umfasst.

## Revendications

1. Composition de confiserie comportant :
a. une premier région, la première région comportant un matériau particulaire dans lequel le matériau particulaire a une chaleur de dissolution négative et dans lequel le matériau particulaire a une masse volumique comprise entre environ 0,4gm./ml. et environ 0,8 gm./ml.;
b. une deuxième région, la deuxième région comportant une matrice soluble pouvant être mâchée, ayant une teneur en humidité comprise entre environ 5% en poids et environ 15% en poids de la matrice pouvant être mâchée, dans lequel la deuxième région entoure au moins partiellement la première région; et
c. une troisième région entourant au moins partiellement la deuxième région, la troisième région comportant un revêtement.

2. Composition formant confiserie suivant la revendication 1, dans laquelle la première région comporte un mélange de matériaux particulaires, dans lequel le mélange de matériaux particulaires comporte un premier matériau particulaire et un deuxième matériau particulaire, dans lequel le premier matériau particulaire est sélectionné dans le groupe consistant en du dextrose, du sorbitol et de leur combinaison et dans lequel le deuxième matériau particulaire est sélectionné dans le groupe consistant en le mannitol, le maltitol, l'isomalt, le xylitol, l'erythritol, le sucrose, le maltose et leurs combinaisons, dans lequel le mélange est moins hygroscopique que le sorbitol.

3. Composition formant confiserie suivant la revendication 2, dans laquelle le mélange a une granulométrie maximum inférieure à environ 600 microns.

4. Composition formant confiserie suivant la revendication 2, dans laquelle la première région comporte en outre un support.

5. Composition formant confiserie suivant la revendication 1, dans laquelle la deuxième région comporte une ou plusieurs cavités ayant chacune un volume et dans laquelle la première région est située à l'intérieur desdites une ou plusieurs cavités de sorte que la première région emplit au moins 90% du volume des une ou plusieurs cavités.

6. Procédé de production d'une confiserie comportant les étapes dans lesquelles :
a. on produit une corde fourrée comportant :
i. une première région, la première région comportant un matériau particulaire et un support, dans lequel le matériau particulaire a une chaleur de dissolution négative et dans lequel le matériau particulaire a une masse volumique comprise entre environ 0,4 gm./ml. et environ 0,8 gm./ml.; et
ii. une deuxième région, la deuxième région comportant une matrice soluble pouvant être mâchée ayant une teneur en humidité comprise entre environ 5% en poids et environ 15% en poids de la matrice pouvant être mâchée, dans lequel la deuxième région a une teneur en humidité comprise entre environ 5% et environ 15% en poids de la deuxième région, et dans lequel la deuxième région entoure au moins partiellement la première région;
b. on dimensionne la corde fourrée;
c. on forme la corde fourrée dimensionnée en parties individuelles; et
d. on applique une troisième région aux parties individuelles, dans lequel la troisième région entoure au moins partiellement la deuxième région et la troisième région comporte un revêtement.

7. Procédé pour fournir une sensation rafraîchissante à un utilisateur comportant les étapes dans lesquelles :
a. on produit un produit formant confiserie suivant la revendication 6; et
b. on formule la première région de sorte qu'elle ait une intensité plus élevée de refroidissement chimique que la deuxième région.

8. Procédé suivant la revendication 6, comportant en outre l'étape de formulation de la troisième région de manière à ce qu'elle ait une chaleur de dissolution négative.

9. Procédé suivant la revendication 6, comportant en outre l'étape de formulation de la troisième région de sorte qu'elle inclut au moins un agent refroidissant.
